(19) Europäisches Patentamt
European Patent Office
Office européen des brevets

(11) **EP 2 894 497 A1**

(12) **EUROPEAN PATENT APPLICATION**
published in accordance with Art. 153(4) EPC

(43) Date of publication:
**15.07.2015 Bulletin 2015/29**

(21) Application number: **13834806.5**

(22) Date of filing: **05.09.2013**

(51) Int Cl.:
***G02B 1/10*** *(2015.01)* ***B32B 3/30*** *(2006.01)*
***B32B 27/18*** *(2006.01)* ***C09D 5/16*** *(2006.01)*
***G06F 3/041*** *(2006.01)*

(86) International application number:
**PCT/JP2013/073890**

(87) International publication number:
**WO 2014/038616 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.09.2012 JP 2012195376**

(71) Applicant: **Dexerials Corporation**
**Tokyo 141-0032 (JP)**

(72) Inventors:
- **IWATA Ryosuke**
  **Tokyo 141-0032 (JP)**
- **MIZUNO Mikihisa**
  **Tokyo 141-0032 (JP)**
- **SHIBATA Akihiro**
  **Tokyo 141-0032 (JP)**
- **SUZUKI Shinya**
  **Tokyo 141-0032 (JP)**

(74) Representative: **Müller-Boré & Partner Patentanwälte PartG mbB**
**Friedenheimer Brücke 21**
**80639 München (DE)**

(54) **ANTIFOULING BODY, DISPLAY DEVICE, INPUT DEVICE, AND ELECTRONIC DEVICE**

(57) An anti-smudge body having a surface that, when fingerprints adhere to the surface, allows the fingerprint patterns to spread spontaneously to thereby cause the adhering fingerprints to become less noticeable has a surface and a fine irregular structure provided to the surface, wherein the irregular structure contains at least one of a first compound having an ester linkage in a portion other than terminal ends and a second compound having a cyclic hydrocarbon group.

FIG. 1

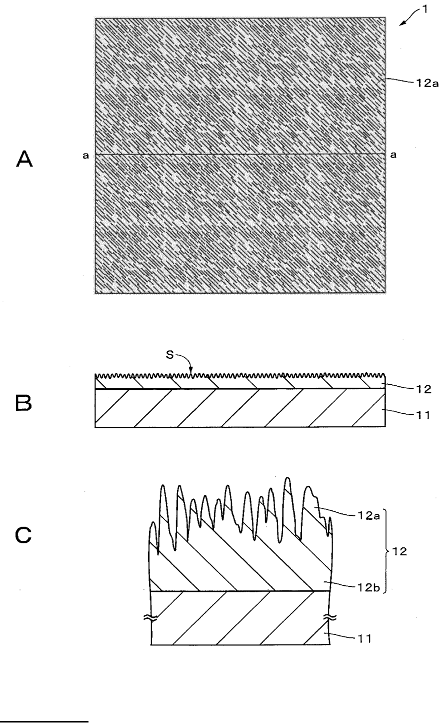


EP 2 894 497 A1

## Description

Technical Field

The present technique relates to an anti-smudge body and to a display device, an input device, and an electronic device, each including the anti-smudge body. Particularly, the present technique relates to an anti-smudge layer that suppresses smudges on a surface.

Background Art

In recent years, information display devices equipped with a touch panel as a user interface (UI) are rapidly becoming widespread. A touch panel has an advantage in that the user can operate the device intuitively by directly touching the display screen with a finger. However, a problem with the touch panel is that fingerprints adhering to the display screen deteriorate the visibility of the display screen. Therefore, there is a demand for a fingerprint resistant surface on which even fingerprints adhering thereto are less noticeable.

An anti-smudge layer designed such that a fluorine-based compound or a silicon-based compound is present on the outermost surface has been conventionally used for a display surface including a touch panel (see, for example, Patent Literature 1). This is because the outermost surface of the anti-smudge layer is a water-repellent and oil-repellent surface, and has an effect in that the adhesion of oil and fat components forming fingerprints is weakened, so that the fingerprints can be easily wiped off with, for example, a cloth.

Further, a water-repellent oleophilic surface that does not repel oil and fat components has been proposed (see, for example, Patent Literature 2). When fingerprints adhere to this surface, the oil and fat components of fingerprints adhering to the surface spread and do not form droplets, so that the fingerprints are less noticeable.

Citation List

Patent Literature

Patent Literature 1: Japanese Patent No. 4666667
Patent Literature 2: Japanese Patent Application Laid-Open No. 2010-128363

Summary of Invention

Technical Problem

As described above, there is a demand for a surface that allows fingerprints adhering thereto to become less noticeable. However, in consideration of applications such as capacitive touch panels, a surface that allows fingerprint patterns to spread spontaneously to thereby cause the adhering fingerprints to become less noticeable (a fingerprint resistant surface) is considered to be important.

Accordingly, it is an object of the present technique to provide an anti-smudge body having a surface that, when fingerprints adhere to the surface, allows the fingerprint patterns to spread spontaneously to thereby cause the adhering fingerprints to become less noticeable and to provide a display device, an input device, and an electronic device, each including the anti-smudge body. Solution to Problem

To solve the foregoing problem, a first technique is an anti-smudge body having
a surface and a fine irregular structure provided to the surface, wherein
the irregular structure contains at least one of a first compound having an ester linkage in a portion other than terminal ends and a second compound having a cyclic hydrocarbon group.

A second technique is an input device having
an input surface and a fine irregular structure provided to the surface, wherein
the irregular structure contains at least one of a first compound having an ester linkage in a portion other than terminal ends and a second compound having a cyclic hydrocarbon group.

A third technique is a display device having
a display surface and a fine irregular structure provided to the display surface, wherein
the irregular structure contains at least one of a first compound having an ester linkage in a portion other than terminal ends and a second compound having a cyclic hydrocarbon group.

A fourth technique is an electronic device having

a surface and a fine irregular structure provided to the surface, wherein
the irregular structure contains at least one of a first compound having an ester linkage in a portion other than terminal ends and a second compound having a cyclic hydrocarbon group.

A fifth technique is an anti-smudge article having
a surface and a fine irregular structure provided to the surface, wherein
the irregular structure contains at least one of a first compound having an ester linkage in a portion other than terminal ends and a second compound having a cyclic hydrocarbon group.

In the present technique, the anti-smudge body is preferably an anti-smudge layer, an anti-smudge structure layer, or an anti-smudge substrate. The anti-smudge structure layer means a structure layer including a plurality of structure bodies and an anti-smudge layer provided so as to conform to the surface of the structure bodies.

In the present technique, the fine irregular structure is provided to the surface of the anti-smudge body, and the irregular structure contains at least one of a first compound having an ester linkage in a portion other than terminal ends and a second compound having a cyclic hydrocarbon group. Therefore, when fingerprints adhere to the surface, the fingerprint patterns spread spontaneously and the adhering fingerprints become less noticeable.

Advantageous Effects of Invention

As described above, with the present technique, when fingerprints adhere to the surface of the anti-smudge body, the fingerprint patterns spread spontaneously and the adhering fingerprints become less noticeable. Brief Description of Drawings

FIG. 1A is a plan view illustrating an example of a configuration of an anti-smudge substrate according to a first embodiment of the present technique. FIG. 1B is a cross-sectional view taken along line a-a shown in FIG. 1A. FIG. 1C is an enlarged cross-sectional view representing part of FIG. 1B.
FIG. 2A is a plan view illustrating an example of a configuration of a plate-shaped master. FIG. 2B is a cross-sectional view taken along line a-a shown in FIG. 2A. FIG. 2C is an enlarged cross-sectional view representing part of FIG. 2B.
FIG. 3 is a schematic diagram illustrating an example of a configuration of a laser processing apparatus for producing a plate-shaped master.
FIGs. 4A to 4C are process diagrams illustrating an example of the method of producing the anti-smudge substrate according to the first embodiment in the present technique.
FIGs. 5A to 5C are process diagrams illustrating an example of the structure forming step using an energy ray curable resin or a thermosetting resin.
FIGs. 6A to 6C are process diagrams illustrating an example of the structure forming step using a thermoplastic resin composition.
FIG. 7A is a cross-sectional view illustrating an example of a configuration of an anti-smudge substrate according to a first modification. FIG. 7B is a cross-sectional view illustrating an example of a configuration of an anti-smudge substrate according to a second modification. FIG. 7C is a cross-sectional view illustrating an example of a configuration of an anti-smudge substrate according to a third modification.
FIG. 8A is a cross-sectional view illustrating an example of a configuration of an anti-smudge substrate according to a fourth modification. FIG. 8B is a cross-sectional view illustrating an example of a configuration of an anti-smudge substrate according to a fifth modification. FIG. 8C is a cross-sectional view illustrating an example of a configuration of an anti-smudge substrate according to a sixth modification.
FIG. 9A is a cross-sectional view illustrating an example of a configuration of an anti-smudge substrate according to a second embodiment of the present technique. FIG. 9B is an enlarged cross-sectional view representing part of FIG. 9A.
FIG. 10A is a cross-sectional view illustrating an example of a configuration of an anti-smudge substrate according to a third embodiment of the present technique. FIG. 10B is an enlarged cross-sectional view representing part of FIG. 10A.
FIGs. 11A to 11C are schematic diagrams illustrating examples of configurations of an anti-smudge substrate according to a fourth embodiment of the present technique.
FIG. 12A is a perspective view illustrating an example of a configuration of a master roll. FIG. 12B is an enlarged cross-sectional view illustrating part of the master roll shown in FIG. 12A. FIG. 12C is an enlarged cross-sectional view representing part of FIG. 12B.
FIG. 13 is a schematic diagram illustrating an example of a configuration of a laser processing apparatus for producing a master roll.
FIGs. 14A and 14C are process diagrams illustrating an example of the method of producing the anti-smudge substrate according to a fifth embodiment in the present technique.

FIGs. 15A and 15B are process diagrams illustrating an example of the structure forming step using an energy ray curable resin or a thermosetting resin.

FIGs. 16A and 16B are process diagrams illustrating an example of the structure forming step using a thermoplastic resin composition.

FIG. 17 is a perspective view illustrating an example of a configuration of a display device according to a sixth embodiment of the present technique.

FIG. 18A is a perspective view illustrating an example of a configuration of a display device according to a seventh embodiment of the present technique. FIG. 18B is an exploded perspective view illustrating a modification of an input device according to the seventh embodiment of the present technique.

FIG. 19A is an external view illustrating a television set, which is an example of the electronic device.

FIG. 19B is an external view illustrating a notebook-type personal computer, which is an example of the electronic device.

FIG. 20A is an external view illustrating a cellular phone, which is an example of the electronic device.

FIG. 20B is an external view illustrating a tablet-type computer, which is an example of the electronic device.

FIG. 21A is a view showing an AFM image of the surface of the anti-smudge film in Example 1. FIG. 21B is a view illustrating a cross-sectional profile along line a-a shown in FIG. 21A.

FIG. 22A is a view showing an AFM image of the surface of the anti-smudge film in Example 2. FIG. 22B is a view illustrating a cross-sectional profile along line a-a shown in FIG. 22A.

FIG. 23A is a view showing an AFM image of the surface of the anti-smudge film in Example 3. FIG. 23B is a view illustrating a cross-sectional profile along line a-a shown in FIG. 23A.

FIG. 24A is a view showing an AFM image of the surface of the anti-smudge film in Example 4. FIG. 24B is a view illustrating a cross-sctional profile along line a-a shown in FIG. 24A.

FIG. 25A is a view showing an AFM image of the surface of the anti-smudge film in Example 5. FIG. 25B is a view illustrating a cross-sectional profile along line a-a shown in FIG. 25A.

## Description of Embodiments

Embodiments of the present technique will be described in the following order.

1. First embodiment (an example of an anti-smudge substrate having a fingerprint resistant surface)
2. Second embodiment (an example of an anti-smudge substrate having a fingerprint resistant surface)
3. Third embodiment (an example of an anti-smudge substrate having a fingerprint resistant surface)
4. Fourth embodiment (an example of an anti-smudge substrate having a fingerprint resistant surface)
5. Fifth embodiment (an example of a method of producing an anti-smudge substrate)
6. Sixth embodiment (an example of a display device having a fingerprint resistant surface)
7. Seventh embodiment (an example of an input device having a fingerprint resistant surface)
8. Eighth embodiment (an example of an electronic device having a fingerprint resistant surface)

### <1. First embodiment>

### [Configuration of anti-smudge substrate]

FIG. 1A is a plan view illustrating an anti-smudge substrate according to a first embodiment of the present technique. FIG. 1B is a cross-sectional view taken along line a-a shown in FIG. 1A. FIG. 1C is an enlarged cross-sectional view representing part of FIG. 1B. The anti-smudge substrate (anti-smudge body) has a fingerprint resistant surface (anti-smudge surface) S having an anti-fingerprint function. This fingerprint resistant surface S contains a compound having a specific molecular structure described later and has a fine irregular structure thereon. Therefore, fingerprints adhering to the fingerprint resistant surface S spread spontaneously and are likely to become less noticeable. In addition, fingerprints adhering to the fingerprint resistant surface S can be made less noticeable by rubbing the fingerprints with, for example, a finger to spread them thinly. The fingerprint resistant surface S has shape fluctuations. Such shape fluctuations can prevent spectral dispersion.

The anti-smudge substrate includes a substrate 11 and an anti-smudge layer 12 provided on the surface of the substrate 11. In the following description, the anti-smudge substrate including the substrate 11 and the anti-smudge layer 12 will be described as an example of the anti-smudge body. However, the anti-smudge body is not limited to this example, and the anti-smudge layer 12 alone may be used as the anti-smudge body.

The anti-smudge substrate according to the first embodiment is suitably applied to the surface of a device that is touched with a hand, a finger, etc. The surface of such a device is, for example, at least one portion of a display surface, an input surface, or the surface of a casing. It is also preferable that the anti-smudge layer 12 be applied directly

to the surface of the device with no substrate 11. Specific examples of the device that is touched with a hand, a finger, etc. may include display devices, input devices, and electronic devices.

Examples of the display devices may include various display devices such as a liquid crystal display, a CRT (cathode ray tube) display, a plasma display panel (PDP), an electro luminescence (EL) display, and a surface-conduction electron-emitter Display (SED).

Examples of the input devices may include, but are not limited to, touch panels, mice, and keyboards. Examples of the touch panels may include, but are not limited to, touch panels provided in television sets, personal computers, mobile devices (such as smart phones and slate PCs), and photo frames.

The electronic device is preferably an electronic device including at least one of a display device, an input device, a casing, etc. Examples of such an electronic device may include, but are not limited to, television sets, personal computers (PC), mobile devices (such as smart phones and slate PCs), and photo frames.

The objects to which the anti-smudge substrate or the anti-smudge layer 12 is applied are not limited to the above-described devices, and the anti-smudge substrate or the anti-smudge layer 12 is preferably applicable to any object having a surface touched with a hand or a finger. Examples of articles (anti-smudge articles) other than the devices described above may include, but are not limited to, paper, plastic, glass, and metal products (specifically, for example, photographs, photograph stands, plastic cases, metal cases, glass windows, plastic windows, picture frames, lenses, furniture, and electric appliances).

(Substrate)

The substrate 11 is, for example, a transparent inorganic substrate or a transparent plastic substrate. The shape of the substrate 11 used may be, for example, a film shape, a sheet shape, a plate shape, or a block shape. Examples of the material of the inorganic substrate may include quartz, sapphire, and glass. Any known macromolecular material can be used as the material of the plastic substrate. Specific examples of the known macromolecular material may include triacetylcellulose (TAC), polyester (TPEE), polyethylene terephthalate (PET), polyethylene naphthalate (PEN), polyimide (PI), polyamide (PA), aramid, polyethylene (PE), polyacrylate, polyether sulfone, polysulfone, polypropylene (PP), polystyrene, diacetylcellulose, polyvinyl chloride, acrylic resin (PMMA), polycarbonate (PC), epoxy resin, urea resin, urethane resin, melamine resin, phenol resin, acrylonitrile-butadiene-styrene copolymers, cycloolefin polymers (COP), cycloolefin copolymers (COC), PC/PMMA stacked body, and rubber added PMMA. A design or a pattern may be printed or vapor-deposited on the substrate. When the anti-smudge substrate is used for an exterior application, the substrate 11 may not be transparent. Examples of the material of the substrate 11 may include stainless steel, magnesium alloys, aluminum, aluminum alloys, titanium alloys, galvalume steel, and carbon fiber reinforced plastics.

The substrate 11 may be processed into part of the exterior or display of an electronic device etc. The surface shape of the substrate 11 is not limited to a flat shape, and the substrate 11 may have an uneven surface, a polygonal surface, a curved surface, or a combination thereof. Examples of the curved surface may include a spherical surface, an elliptic surface, a parabolic surface, and a free curved surface. The anti-smudge substrate may be formed into the curved surface by, for example, an in-mold molding process. The in-mold molding is a process in which the anti-smudge substrate is placed in a mold and a resin such as a plastic is injected to perform molding and surface decorating simultaneously. Alternatively, the anti-smudge substrate itself may be subjected to press working using a pressing die to form the anti-smudge substrate into the above-described curved surface. In any of the above molding processes, a protective film may be placed on the anti-smudge layer of the anti-smudge substrate, in order to protect the protrusions on the surface of the anti-smudge substrate from being damaged. A prescribed structure may be provided on the surface of the substrate 11 by, for example, UV transfer, thermal transfer, pressure transfer, melt extrusion, etc.

(Anti-smudge layer)

The anti-smudge layer 12 has a fine irregular structure on the fingerprint resistant surface S. This irregular structure is a random nanostructure. More specifically, the irregular structure is composed of a plurality of nanosized structure bodies 12a provided randomly on the surface of the substrate 11. When the irregular structure is the random nanostructure described above, spectral dispersion can be prevented.

The irregular structure has, for example, an extending structure in which projections and depressions extend one-dimensionally or two-dimensionally or a needle-shaped structure in which needle-shaped projections are two-dimensionally provided. These structures have shape fluctuations. With a structure with fluctuations, spectral dispersion can be prevented. When the irregular structure has the extending structure described above, its fluctuations include, for example, fluctuations in the projections in the irregular structure in their width direction, fluctuations in the depressions in the irregular structure in their width direction, fluctuations in the projections in the irregular structure in their projecting direction, and fluctuations in the depressions in the irregular structure in their depression direction. When the irregular structure has the needle-shaped structure, its fluctuations include, for example, fluctuations in size of the needle-shaped

projections and fluctuations in pitch between adjacent needle-shaped projections (distance between the apexes of the adjacent needle-shaped projections). The fluctuations in size of the needle-shaped projections include fluctuations in size of the bottom surfaces of the projections and fluctuations in height of the projections.

The anti-smudge layer 12 may further include a base layer 12b between the substrate 11 and the plurality of structure bodies 12a. The base layer 12b is a layer formed integrally with the structure bodies 12a on the bottom side of the structure bodies 12a and is formed from the same material as that of the structure bodies 12a. The anti-smudge layer 12 is a modified surface layer containing at least one of a first compound having an ester linkage in a portion other than its terminal ends and a second compound having a cyclic hydrocarbon group. Since the anti-smudge layer 12 contains at least one of the first compound and the second compound, the ease of wiping off fingerprints can be improved. The above terminal ends are terminal ends of the main and side chains. The anti-smudge layer 12 is a coating layer formed by, for example, a wet process or a dry process.

When the anti-smudge layer 12 contains the second compound, it is preferable that the anti-smudge layer 12 further contain, together with the second compound, a third compound having a chain hydrocarbon group at its terminal end. In this case, the ease of wiping off fingerprints can be further improved. The above terminal end is a terminal end of any of the main and side chains. No particular limitation is imposed on the contents of the second and third compounds in the anti-smudge layer 12. However, since the third compound has the property of gathering on the fingerprint resistant surface S relatively easily, it is preferable that the contents be selected in consideration of this property.

The anti-smudge layer 12 contains at least one selected from the group consisting of energy ray-curable resin compositions, thermosetting resin compositions, and thermoplastic resin compositions. These resin compositions contain, for example, at least one of the first compound and the second compound. When these resin compositions contain the second compound, it is preferable that they contain the third compound together with the second compound.

If necessary, the anti-smudge layer 12 may further contain additives such as a polymerization initiator, a light stabilizer, an ultraviolet absorber, a catalyst, a coloring agent, an antistatic agent, a lubricant, a leveling agent, an antifoaming agent, a polymerization promoter, an antioxidant, a flame retardant, an infrared absorber, a surfactant, a surface modifier, a thixotropic agent, and a plasticizer. The anti-smudge layer 12 may further contain light-scattering particles such as an organic resin filler that scatter light, in order to impart an AG (Anti-Glare) function to the fingerprint resistant surface S. When the AG function is imparted, the light-scattering particles may protrude from the fingerprint resistant surface S of the anti-smudge layer 12 or may be covered with, for example, a resin contained in the anti-smudge layer 12. The light-scattering particles may or may not be in contact with the substrate 11, which is a lower layer. The average thickness of the anti-smudge layer 12 is within the range of, for example, a monomolecular thickness or more and 1 mm or less, preferably a monomolecular thickness or more and 100 $\mu$m or less, and particularly preferably a monomolecular thickness or more and 10 $\mu$m or less.

The first compound and/or the second compound is, for example, at least one of main and accessory components of the material constituting the anti-smudge layer 12. When the anti-smudge layer 12 is a layer formed by a wet process, the main component is, for example, a base resin, and the accessory component is, for example, an additive such as the leveling agent described above. Preferably, the first, second, and third compounds are additives. This is because, for example, deterioration of hardness of the base resin can be suppressed. When any of these compounds is an additive as described above, it is preferable that the additive be a leveling agent. When the first, second, and third compounds are additives such as a leveling agent, it is preferable that the first, second, and third compounds be bonded to the base resin through, for example, a polymerization reaction. This is because the durability of the fingerprint resistant surface S can be improved.

(Structure bodies)

The plurality of structure bodies 12a have a convex shape protruding from the surface of the substrate 11. The shape of the structure bodies 12a used may be, for example, a stripe shape, a mesh shape, or a needle shape. FIG. 1A shows an example in which the structure bodies 12a have a stripe shape. The stripe shape and the mesh shape are the shapes when the structure bodies 12a are viewed in a direction perpendicular to the fingerprint resistant surface S. The needle shape is the shape when the structure bodies 12a are viewed in an in-plane direction of the fingerprint resistant surface S.

Structure bodies 12a having a stripe or mesh shape have random fluctuations in the height direction of the structure bodies 12a (i.e., the width direction of the substrate 11) and in a width direction of the structure bodies 12a (i.e., an in-plane direction of the substrate 11). Structure bodies 12a having a needle shape are randomly provided in two dimensions in in-plane directions of the substrate 11. The heights of the structure bodies 12a having a needle shape vary randomly. The stripe shape is meant to include not only a structure in which a plurality of structure bodies 12a extend continuously in one direction but also a structure in which a plurality of structure bodies 12a extend intermittently in one direction. The stripe shape is also meant to include a structure in which a plurality of structure bodies 12a having random lengths and extending in one direction are two-dimensionally arranged.

The average pitch Pm of the structure bodies 12a is preferably in the range of 1 nm or larger and 1 mm or smaller, more preferably in the range of 5 nm or larger and 1 μm or smaller, and still more preferably in the range of 10 nm or larger and 500 nm or smaller. When the average arrangement pitch Pm is 1 nm or larger and 1 mm or smaller, fingerprint patterns spread effectively. The pitches of the structure bodies 12a may not be uniform.

The average pitch Pm of the structure bodies 12a is determined in the following manner.

First, the fingerprint resistant surface S is observed under an atomic force microscope (AFM). Then two adjacent structure bodies 12a are arbitrarily selected from a cross-sectional profile of the AFM image, and the distance between the selected structure bodies (the smallest distance between the tops of minimum repeating structures) is determined as a pitch. Next, this procedure is repeated for 10 arbitrary portions on the fingerprint resistant surface to determine pitches P1, P2, ..., P10. Then the pitches P1, P2, ..., P10 are simply averaged (arithmetically averaged) to determine the average pitch Pm.

The arithmetic mean roughness Ra of the fingerprint resistant surface S is preferably in the range of 1 nm or larger and 1 mm or smaller, more preferably in the range of 2 nm or larger and 1 μm or smaller, and still more preferably in the range of 5 nm or larger and 100 nm or smaller. When the arithmetic mean roughness Ra is 1 nm or larger and 1 mm or smaller, fingerprint patterns spread effectively.

The arithmetic mean roughness Ra of the fingerprint resistant surface S is determined in the following manner.

First, the fingerprint resistant surface S is observed under an atomic force microscope (AFM) with a field of view of 3 μm x 3 μm. Next, an arithmetic mean roughness ra is determined from a cross sectional profile of the AFM image. Then this procedure is repeated for 10 arbitrary portions on the fingerprint resistant surface to determine ra1, ra2, ..., ra10. Next, these ra1, ra2, ..., ra10 are simply averaged (arithmetically averaged) to determine the arithmetic mean roughness Ra.

When liquid is present on the fingerprint resistant surface S, it is preferable that the recessed portions in the irregular structure on the fingerprint resistant surface S (specifically, the recessed portions between the structure bodies 12a on the fingerprint resistant surface S) cause positive capillary pressure to act on the liquid. When positive capillary pressure acts on a liquid droplet present on the fingerprint resistant surface S, the liquid droplet can be allowed to spread thinly. It is preferable to allow capillary pressure in a depth direction to act thereon in addition to the positive capillary pressure. This is because the liquid droplet can be allowed to spread more thinly. Capillary pressure acting in a direction away from the liquid droplet on the fingerprint resistant surface S is defined as the positive capillary pressure.

(First compound)

The first compound may be an organic material, an organic-inorganic composite material, a macromolecular material, or a monomolecular material, so long as the first compound has an ester linkage in a portion other than terminal ends. No particular limitation is imposed on the molecular structure of the first compound so long as it has an ester linkage, and the first compound may have any functional group, any bonding site, any hetero atom, any halogen atom, any metal atom, etc. The first compound used may be, for example, a compound having, in its molecule, a structure represented by the formula (1) or (2) below.

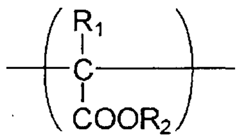

· · · (1)

In the formula (1), $R_1$ is a group containing an atom such as C, N, S, O, Si, P, or Ti. The group containing such an atom is, for example, a hydrocarbon group, a sulfo group (including a sulfonate), a sulfonyl group, a sulfonamide group, a carboxylic acid group (including a carboxylate), an amino group, an amide group, a phosphoric acid group (including a phosphate and a phosphoric ester), a phosphino group, a silanol group, an epoxy group, an isocyanate group, a cyano group, a thiol group, or a hydroxyl group. $R_2$ is a group having 2 or more carbon atoms and is, for example, a group containing an atom such as C, N, S, O, Si, P, or Ti. The group containing such an atom is, for example, a hydrocarbon group, a sulfo group (including a sulfonate), a sulfonyl group, a sulfonamide group, a carboxylic acid group (including a carboxylate), an amino group, an amide group, a phosphoric acid group (including a phosphate and a phosphoric ester), a phosphino group, a silanol group, an epoxy group, an isocyanate group, a cyano group, a thiol group, or a hydroxyl group.

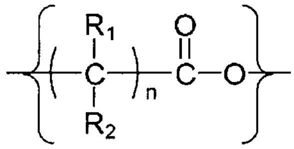

· · · (2)

In the formula (2), $R_1$ and $R_2$ are each independently a group containing an atom such as C, N, S, O, Si, P, or Ti. The group containing such an atom is, for example, a hydrocarbon group, a sulfo group (including a sulfonate), a sulfonyl group, a sulfonamide group, a carboxylic acid group (including a carboxylate), an amino group, an amide group, a phosphoric acid group (including a phosphate and a phosphoric ester), a phosphino group, a silanol group, an epoxy group, an isocyanate group, a cyano group, a thiol group, or a hydroxyl group.

(Second compound)

The second compound has a cyclic hydrocarbon group. The cyclic hydrocarbon group may be, for example, an unsaturated cyclic hydrocarbon group or a saturated cyclic hydrocarbon group and may have, in its molecule, both an unsaturated cyclic hydrocarbon group and a saturated cyclic hydrocarbon group. The anti-smudge layer 12 may contain a second compound having an unsaturated cyclic hydrocarbon group and a second compound having a saturated cyclic hydrocarbon group. The cyclic hydrocarbon group may be any of a monocyclic hydrocarbon group and a polycyclic hydrocarbon group. The cyclic hydrocarbon group may have an additional substituent. Examples of the additional substituent may include a hydrocarbon group, a sulfo group (including sulfonates), a sulfonyl group, a sulfonamide group, a carboxylic acid group (including carboxylates), an amino group, an amide group, a phosphoric acid group (including phosphates and phosphoric esters), a phosphino group, a silanol group, an epoxy group, an isocyanate group, a cyano group, a thiol group, and a hydroxyl group. The second compound may be an organic material, an organic-inorganic composite material, a macromolecular material, or a monomolecular material, so long as the second compound has a cyclic hydrocarbon group. No particular limitation is imposed on the molecular structure of the second compound so long as it has a cyclic hydrocarbon group, and the second compound may have any functional group, any bonding site, any hetero atom, any halogen atom, any metal atom, etc. Examples of the saturated cyclic hydrocarbon group may include groups having 5 or more carbon atoms and having monocyclo, bicyclo, tricyclo, and tetracyclo structures and similar structures. More specific examples thereof may include a cyclopentyl group, a cyclohexyl group, a cycloheptyl group, a cyclooctyl group, a cyclononyl group, a cyclodecyl group, a cyclododecyl group, an adamantyl group, a noradamantyl group, a tricyclodecyl group, a tetracyclododecyl group, a norbornyl group, an isobornyl group, and a steroid group. Examples of the unsaturated cyclic hydrocarbon group may include a phenyl group, a naphthyl group, a pyrenyl group, a pentacenyl group, and an anthryl group.

For example, a compound having, in its molecule, a structure represented by the formula (3) below may be used as the organic material.

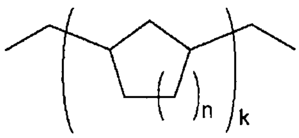

· · · (3)

For example, a compound having, in its molecule, a structure represented by the formula (4) below may be used as the organic-inorganic composite material.

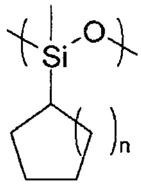

· · · (4)

(Third compound)

The third compound has a chain hydrocarbon group (an acyclic hydrocarbon group) at its terminal end. The chain hydrocarbon group is, for example, any of an unsaturated chain hydrocarbon group and a saturated chain hydrocarbon group, and the third compound may contain, in its molecule, both an unsaturated chain hydrocarbon group and

a saturated chain hydrocarbon group. The chain hydrocarbon group may be a linear chain hydrocarbon group or a branched chain hydrocarbon group, and the third compound may contain, in its molecule, both a linear chain hydrocarbon group and a branched chain hydrocarbon group. The chain hydrocarbon group may have an additional substituent. Examples of the additional substituent may include a hydrocarbon group, a sulfo group (including sulfonates), a sulfonyl group, a sulfonamide group, a carboxylic acid group (including a carboxylate), an amino group, an amide group, a phosphoric acid group (including phosphates and phosphoric esters), a phosphino group, a silanol group, an epoxy group, an isocyanate group, a cyano group, a thiol group, and a hydroxyl group.

Any of an organic material, an organic-inorganic composite material, a macromolecular material, and a monomolecular material may be used as the third compound, so long as it is a compound having a chain hydrocarbon group at its terminal end. No particular limitation is imposed on the molecular structure of the third compound so long as it has a chain hydrocarbon group at its terminal end, and the third compound may have any functional group, any bonding site, any hetero atom, any halogen atom, any metal atom, etc. Examples of the unsaturated chain hydrocarbon group may include unsaturated chain hydrocarbon groups having 2 or more carbon atoms. Specific examples thereof may include a propene group, a butene group, a pentene group, a hexene group, a heptene group, an octene group, a decene group, a dodecene group, a tetradecane group, a hexadecene group, an octadecene group, and a docosene group. Examples of the saturated chain hydrocarbon group may include saturated chain hydrocarbon groups having 2 or more carbon atoms. More specific examples thereof may include an ethyl group, a propyl group, an isopropyl group, a butyl group, an isobutyl group, a pentyl group, an isopentyl group, a hexyl group, an isohexyl group, a heptyl group, an isoheptyl group, an octyl group, an isooctyl group, a nonyl group, an isononyl group, a decyl group, an isodecyl group, a dodecyl group, an isododecyl group, a lauryl group, a tridecyl group, an isotridecyl group, a myristyl group, an isomyristyl group, a cetyl group, an isocetyl group, a stearyl group, an isostearyl group, an arachidyl group, an isoarachidyl group, a behenyl group, an isobehenyl group, and a cholesterol group.

For example, a compound having, in its molecule, a structure represented by the formula (5) below may be used as the organic material.

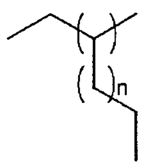

· · · (5)

For example, a compound having, in its molecule, a structure represented by the formula (6) below may be used as the organic-inorganic composite material.

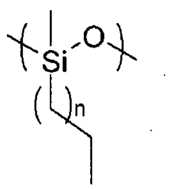

· · · (6)

(Method of examining fingerprint resistant surface)

Whether or not the anti-smudge substrate has a fingerprint resistant surface S can be examined, for example, as follows. First, dynamic contact angles on the surface of the anti-smudge substrate are measured to examine whether or not the advancing contact angle of oleic acid is in the range of 15° or less and the receding contact angle of oleic acid is in the range of 10° or less. Then, when the advancing contact angle of oleic acid and the receding contact angle of oleic acid are within the above ranges, it can be judged that the anti-smudge substrate has a fingerprint resistant surface S. The surface shape of the fingerprint resistant surface S can be examined by surface observation under a scanning electron microscope or an atomic force microscope.

The following examination is also possible.

First, the material of the surface of the anti-smudge substrate is extracted with a solvent and subjected to composition analysis by Gas Chromatograph-Mass Spectrometry (GC-MASS). When at least one of the first and second compounds described above is detected, it can be judged that the anti-smudge substrate has a fingerprint resistant surface S.

A combination of the two examination methods described above may be used to examine whether or not the anti-smudge substrate has a fingerprint resistant surface S.

[Configuration of master]

FIG. 2A is a plan view illustrating an example of a configuration of a plate-shaped master. FIG. 2B is a cross-sectional view taken along line a-a shown in FIG. 2A. FIG. 2C is an enlarged cross-sectional view of part of FIG. 2B. The plate-shaped master 31 is a master for producing an anti-smudge substrate having the above-described configuration, more specifically a master for forming a plurality of structure bodies 12a on the surface of the above substrate. For example, the master 31 has a surface having a fine irregular structure provided thereto, and this surface is a molding surface for forming a plurality of structure bodies 12a on the surface of the substrate. For example, a plurality of structure bodies 32 are provided on the molding surface. The structure bodies 32 are recessed from the molding surface. The material used for the master 31 may be a metal material. Examples of the metal material may include Ni, NiP, Cr, Cu, Al, Fe, and alloys thereof. When an alloy is used, stainless steel (SUS) is preferred. Examples of the stainless steel (SUS) may include, but are not limited to, SUS304 and SUS420J2.

The plurality of structure bodies 32 arranged on the molding surface of the plate-shaped master 31 and the plurality of structure bodies 12a arranged on the surface of the substrate 11 described above have an inverted concave-convex relationship with each other. In other words, the arrangement, size, shape, arrangement pitch, height, etc. of the structure bodies 32 of the plate-shaped master 31 are the same as those of the structure bodies 12a of the substrate 11.

[1-4. Configuration of laser processing apparatus]

FIG. 3 is a schematic diagram illustrating an example of a configuration of a laser processing apparatus for producing a plate-shaped master. The main body 40 of the laser is, for example, IFRIT (product name) manufactured by Cyber Laser Inc. The wavelength of the laser used for laser processing is, for example, 800 nm. However, the wavelength of the laser used for laser processing may be 400 nm or 266 nm. In consideration of processing time and a reduction in pitch of irregularities formed, it is preferable that the frequency of repetition be high. The frequency of repetition is preferably 1,000 Hz or higher. It is preferable that the pulse width of the laser be short. The pulse width is preferably about 200 femtoseconds ($10^{-15}$ seconds) to about 1 picosecond ($10^{-12}$ second).

The main body 40 of the laser emits a laser beam linearly polarized in the vertical direction. Therefore, in this apparatus, a wave plate 41 (e.g., a $\lambda/2$ wave plate) is used to, for example, rotate the polarization direction to thereby obtain linearly polarized light polarized in a desired direction or circularly polarized light. In this apparatus, an aperture 42 with a quadrangular opening is used to extract part of the laser beam. This is because, since the laser beam has a Gaussian intensity distribution, the use of only part of the laser beam near its center allows the resultant laser beam to have a uniform in-plane intensity distribution. In this apparatus, two mutually orthogonal cylindrical lenses 43 are used to narrow the laser beam to thereby obtain a desired beam size. When the plate-shaped master 31 is processed, a linear stage 44 is moved at a uniform velocity.

Preferably, the beam spot of the laser beam with which the master 31 is irradiated has a quadrangular shape. The beam spot can be shaped using, for example, an aperture, a cylindrical lens, etc. Preferably, the intensity distribution of the beam spot is as uniform as possible. This is because it is desirable to make the in-plane distribution of, for example, depth of irregularities formed in a die uniform as much as possible. Generally, the size of the beam spot is smaller than an area to be processed. Therefore, the beam must be scanned to impart an irregular shape to the entire area to be processed.

The master (die) used to form the fingerprint resistant surface S is formed, for example, by drawing a pattern on a substrate formed of a metal such as SUS, NiP, Cu, Al, or Fe, etc. using an ultrashort pulse laser, a so-called femtosecond laser, with a pulse width of 1 picosecond ($10^{-12}$ second) or shorter. The polarization of the laser beam may be any of liner polarization, circular polarization, and elliptical polarization. In this case, a pattern with desired irregularities can be formed by appropriately setting the laser wavelength, the frequency of repetition, the pulse width, the shape of the beam spot, the polarization, the intensity of the laser beam with which a sample is irradiated, the scanning rate of the laser beam, etc.

Parameters that can be changed to obtain the desired shape include parameters described below. Fluence is the energy density (J/cm$^2$) per pulse and can be determined using the following formulas.

$$F = P/(fREPT \times S)$$

$$S = Lx \times Ly$$

F: Fluence

P: The power of the laser
fREPT: The frequency of repetition of the laser
S: The area at the position of laser irradiation
Lx x Ly: Beam size

The number of pulses N is the number of pulses applied to one point and determined using the following formula.

$$N = fREPT \times Ly/v$$

Ly: The size of the beam in the scanning direction of the laser
v: The scanning speed of the laser

The material of the master 31 may be changed in order to obtain the desired shape. The shape after laser processing varies depending on the material of the master 31. In addition to the use of a metal such as SUS, NiP, Cu, Al, or Fe, etc., the surface of the master may be coated with a semiconductor material such as DLC (diamondlike carbon). Examples of the method of coating the surface of the master with a semiconductor material may include plasma CDV and sputtering. The semiconductor material used for the coating may be, in addition to DLC, for example, fluorine (F)-doped DLC (hereinafter referred to as FDLC), titanium nitride, or chromium nitride. The thickness of the coating may be, for example, about 1 μm.

[Method of producing anti-smudge substrate]

FIGs. 4A to 5C are process diagrams illustrating an example of the method of producing the anti-smudge substrate according to the first embodiment in the present technique.

(Laser processing step)

First, as shown in FIG. 4A, a plate-shaped master 31 is prepared. A surface 31A of the master 31, i.e., the surface to be processed, is, for example, mirror-polished. The surface 31A may not be mirror-polished. For example, irregularities finer than the pattern for transfer may be formed on the surface 31A, or irregularities similar to or coarser than the pattern for transfer may be formed on the surface 31A.

Next, the laser processing apparatus shown in FIG. 3 is used to subject the surface 31A of the master 31 to laser processing in the following manner. First, a pattern is drawn on the surface 31A of the master 31 using an ultrashort pulse laser, a so-called femtosecond laser, with a pulse width of 1 picosecond ($10^{-12}$ second) or shorter. For example, as shown in FIG. 4B, the surface 31A of the master 31 is irradiated with a femtosecond laser beam Lf, and the irradiation spot is scanned on the surface 31A.

In this case, by appropriately setting the laser wavelength, the frequency of repetition, the pulse width, the shape of the beam spot, the polarization, the intensity of the laser beam with which the surface 31A is irradiated, the scanning rate of the laser beam, etc., a plurality of structure bodies 32 having a desired shape are formed, as shown in FIG. 4C.

(Structure forming step)

Next, the plate-shaped master 31 obtained as described above is used to perform shape transfer onto a resin material. A plurality of structure bodies 12a are thereby formed on the surface of the substrate 11, whereby the above-described anti-smudge substrate according to the first embodiment is produced. The shape transfer method used may be, for example, a transfer method using an energy ray-curable resin (hereinafter referred to as an "energy ray transfer method"), a transfer method using a thermosetting resin (hereinafter referred to as a "thermosetting transfer method"), or a transfer method using a thermoplastic resin composition (hereinafter referred to as a "thermal transfer method"). The energy ray transfer method is meant to include a 2P transfer method (Photo Polymerization: a shape imparting method using photo-curing). Hereinafter, the structure forming step will be described for two different cases, i.e., a structure forming step using the energy ray transfer method or the thermosetting transfer method and a structure forming step using the thermal transfer method.

[Structure forming step using energy ray transfer method or thermosetting transfer method]

(Step of preparing resin composition)

FIGs. 5A to 5C are process diagrams illustrating an example of the structure forming step using the energy ray transfer method or the thermosetting transfer method. First, if necessary, a resin composition is dissolved in a solvent to dilute the resin composition. In this case, various additives may be added to the resin composition as necessary. The dilution with the solvent is performed as required. When no dilution is necessary, the resin composition may be used without any solvent.

The resin composition contains at least one of an energy ray-curable resin composition and a thermosetting resin composition. The energy ray-curable resin composition means a resin composition that can be cured by irradiation with energy rays. The energy rays are those that can trigger a polymerization reaction of radicals, cations, anions etc. and are energy rays such as an electron beam, ultraviolet rays, infrared rays, a laser beam, visible light, ionizing radiation (X-rays, $\alpha$ rays, $\beta$ rays, $\gamma$ rays, etc.), microwaves, or high-frequency waves. If necessary, the energy ray-curable resin composition used may be mixed with another resin composition and, for example, may be mixed with another curable resin composition such as a thermosetting resin composition. The energy ray-curable resin composition may be an organic-inorganic hybrid material. A mixture of two or more types of energy ray-curable resin compositions may be used. Preferably, the energy ray-curable resin composition used is an ultraviolet ray-curable resin composition that is cured by irradiation with ultraviolet rays.

The energy ray-curable resin composition and the thermosetting resin composition contain, for example, at least one of the first compound having an ester linkage in a portion other than terminal ends and the second compound having a cyclic hydrocarbon group. Preferably, from the viewpoint of improving the ease of wiping off fingerprints, the energy ray-curable resin composition and/or the thermosetting resin composition further contain the third compound having a chain hydrocarbon group at its terminal end in addition to the second compound.

When the resin composition further contains an additive (including an initiator) in addition to a base resin, the first, second, and third compounds may be additives. In this case, the additive is preferably a leveling agent.

The ultraviolet ray-curable resin composition contains, for example, an initiator and a (meth)acrylate having a (meth)acryloyl group. The (meth)acryloyl group means an acryloyl group or a methacryloyl group. The (meth)acrylate means an acrylate or a methacrylate. The ultraviolet ray-curable resin composition contains, for example, a monofunctional monomer, a bifunctional monomer, a polyfunctional monomer, etc. More specifically, the ultraviolet ray-curable resin composition is one of the materials shown below or a mixture of two or more thereof.

Examples of the monofunctional monomer may include carboxylic acids (acrylic acid), hydroxy compounds (2-hydroxyethyl acrylate, 2-hydroxypropyl acrylate, and 4-hydroxybutyl acrylate), alkyls, alicyclic compounds (isobutyl acrylate, t-butyl acrylate, isooctyl acrylate, lauryl acrylate, stearyl acrylate, isobornyl acrylate, and cyclohexyl acrylate), other functional monomers (2-methoxyethyl acrylate, methoxy ethylene glycol acrylate, 2-ethoxyethyl acrylate, tetrahydrofurfuryl acrylate, benzyl acrylate, ethylcarbitol acrylate, phenoxyethyl acrylate, N,N-dimethylaminoethyl acrylate, N,N-dimethylaminopropyl acrylamide, N,N-dimethyl acrylamide, acryloylmorpholine, N-isopropylacrylamide, N,N-diethylacrylamide, N-vinylpyrrolidone, 2-(perfluorooctyl)ethyl acrylate, 3-perfluorohexyl-2-hydroxypropyl acrylate, 3-perfluorooctyl-2-hydroxypropyl acrylate, 2-(perfluorodecyl)ethyl acrylate, 2-(perfluoro-3-methylbutyl)ethyl acrylate, 2,4,6-tribromophenol acrylate, 2,4,6-tribromophenol methacrylate, 2-(2,4,6-tribromophenoxy)ethyl acrylate, and 2-ethylhexyl acrylate).

Examples of the bifunctional monomer may include tri(propylene glycol)diacrylate, trimethylolpropane diallyl ether, and urethane acrylate.

Examples of the polyfunctional monomer may include trimethylolpropane triacrylate, dipentaerythritol pentaacrylate, dipentaerythritol hexaacrylate, and ditrimethylolpropane tetraacrylate.

Examples of the initiator may include 2,2-dimethoxy-1,2-diphenylethane-1-one, 1-hydroxy-cyclohexyl phenyl ketone, and 2-hydroxy-2-methyl-1-phenylpropane-1-one.

From the viewpoint of, for example, the applicability and stability of the resin component and the smoothness of the coating, the solvent used is mixed into the resin composition. As the solvent, water or organic solvent can be used. More specifically, the solvent used is, for example, one or a mixture of two or more of: aromatic-based solvents such as toluene and xylene; alcohol-based solvents such as methyl alcohol, ethyl alcohol, n-propyl alcohol, iso-propyl alcohol, n-butyl alcohol, iso-butyl alcohol, and propylene glycol monomethyl ether; ester-based solvents such as methyl acetate, ethyl acetate, butyl acetate, and cellosolve acetate; ketone-based solvents such as acetone, methyl ethyl ketone, methyl isobutyl ketone, and cyclohexanone; glycol ethers such as 2-methoxyethanol, 2-ethoxyethanol, 2-butoxyethanol, ethylene glycol dimethyl ether, ethylene glycol diethyl ether, diethylene glycol dimethyl ether, and propylene glycol methyl ether; glycol ether esters such as 2-methoxyethyl acetate, 2-ethoxyethyl acetate, 2-butoxyethyl acetate, and propylene glycol methyl ether acetate; chlorine-based solvents such as chloroform, dichloromethane, trichloromethane, and methylene chloride; ether-based solvents such as tetrahydrofuran, diethyl ether, 1,4-dioxane, and 1,3-dioxolane; N-methylpyrrolidone; dimethylformamide; dimethyl sulfoxide; and dimethylacetamide. To suppress drying spots and cracks on

the coated surface, a high-boiling point solvent may be further added to control the evaporation rate of the solvents. Examples of such a solvent may include butyl cellosolve, diacetone alcohol, butyl triglycol, propylene glycol monomethyl ether, propylene glycol monoethyl ether, ethylene glycol monoethyl ether, ethylene glycol monopropyl ether, ethylene glycol monoisopropyl ether, diethylene glycol monobutyl ether, diethylene glycol monoethyl ether, diethylene glycol monomethyl ether, diethylene glycol diethyl ether, dipropylene glycol monomethyl ether, tripropylene glycol monomethyl ether, propylene glycol monobutyl ether, propylene glycol isopropyl ether, dipropylene glycol isopropyl ether, tripropylene glycol isopropyl ether, and methyl glycol. These solvents may be used singly or in combination of two or more.

(Application step)

Next, the prepared resin composition 33 is applied to or printed on the surface of a substrate as shown in FIG. 5A. The application method used may be, for example, wire bar coating, blade coating, spin coating, reverse roll coating, die coating, spray coating, roll coating, gravure coating, micro-gravure coating, lip coating, air knife coating, curtain coating, a comma coating method, or a dipping method. The printing method used may be, for example, a letterpress printing method, an offset printing method, a gravure printing method, an intaglio printing method, a rubber plate printing method, an inkjet method, or a screen printing method.

(Drying step)

Next, if the resin composition 33 contains a solvent, the resin composition is dried to volatilize the solvent, as necessary. No particular limitation is imposed on the drying conditions, and any of natural drying and artificial drying in which drying temperature and drying time are controlled may be used. However, it is preferable that when wind is blown onto the surface of the coating during drying, the wind be blown such that no wind ripples occur on the coating surface. The drying temperature and the drying time can be appropriately determined from the boiling point of the solvent contained in the coating. In this case, it is preferable to select the drying temperature and the drying time within the range in which no deformation of the substrate 11 due to thermal contraction occurs, in consideration of the heat resistance of the substrate 11.

(Curing step)

Next, as shown in FIG. 5B, the plate-shaped master 31 and the resin composition 33 applied to the surface of the substrate 11 are brought into close contact with each other, and the resin composition 33 is cured. Then the substrate 11 integrated with the cured resin composition 33 is peeled off. In this manner, an anti-smudge substrate in which a plurality of structure bodies 12a are formed on the surface of the substrate 11 is obtained, as shown in FIG. 5C. In this case, a base layer 12b may be further formed between the structure bodies 12a and the substrate 11, if necessary. (See FIG. 1C.)

Different curing methods are used for different types of resin compositions 33. When the resin composition 33 used is an energy ray-curable resin composition, the plate-shaped master 31 is pressed against the resin composition 33 to bring them into close contact with each other, and then the resin composition 33 is irradiated with energy rays such as ultraviolet rays (ultraviolet light) from an energy ray source 34 through the substrate 11 to thereby cure the resin composition 33.

No particular limitation is imposed on the energy ray source 34, so long as it can emit energy rays such as an electron beam, ultraviolet rays, infrared rays, a laser beam, visible light, ionizing radiation (X-rays, $\alpha$ rays, $\beta$ rays, $\gamma$ rays, etc.), microwaves, or high-frequency waves, and ultraviolet rays are preferred from the viewpoint of a production facility. Preferably, the cumulative amount of irradiation is appropriately selected in consideration of the curing properties of the resin composition and suppression of yellowing of the resin composition and the substrate 11. Preferably, the atmosphere during irradiation is appropriately selected according to the type of the resin composition. Examples of the atmosphere may include air and inert gas atmospheres such as nitrogen and argon atmospheres.

When the substrate 11 is formed of a material that does not transmit energy rays such as ultraviolet rays, the plate-shaped master 31 may be formed of a material (for example, quartz) that can transmit the energy rays, and the resin composition 33 may be irradiated with the energy rays from the rear surface (the surface opposite to the molding surface) of the plate-shaped master 31.

When the resin composition 33 used is a thermosetting resin composition, the plate-shaped master 31 is pressed against the resin composition 33 to bring them into close contact with each other, and then the resin composition 33 is heated to its curing temperature using the plate-shaped master 31 to thereby cure the resin composition 33. In this case, a cooling roll may be pressed against the surface of the substrate 11 that is opposite to the side onto which the resin composition 33 is applied or printed to thereby prevent thermal defects in the substrate 11. The plate-shaped master 31 includes a heat source such as a heater disposed thereinside or on the rear surface thereof and is therefore

configured so as to be capable of heating the resin composition 33 in close contact with the molding surface of the plate-shaped master 31.

[Structure forming step using thermal transfer method]

FIGs. 6A to 6C are process diagrams illustrating an example of the structure forming step using the thermal transfer method. First, as shown in FIG. 6A, a substrate 11 in which a resin layer 35 serving as a transfer layer is formed on its surface is formed. The resin layer 35 contains, for example, a thermoplastic resin composition. The thermoplastic resin composition contains at least one of the first compound and the second compound. When the thermoplastic resin composition contains the second compound, it is preferable that the thermoplastic resin composition further contain the third compound together with the second compound.

Next, as shown in FIG. 6B, the plate-shaped master 31 is pressed against the resin layer 35 to bring them into close contact with each other. Then, for example, the resin layer 35 is heated to near its glass transition point or to a temperature equal to or higher than the glass transition point to transfer the shape of the molding surface of the plate-shaped master 31. Next, the resin layer 35 with the shape transferred thereto together with the substrate 11 is peeled off the plate-shaped master 31. An anti-smudge substrate in which a plurality of structure bodies 12a are formed on the surface of the substrate 11 is thereby obtained, as shown in FIG. 6C. In this case, a base layer 12b may be further formed between the structure bodies 12a and the substrate 11, if necessary. (See FIG. 1C.) In addition, a cooling roll may be pressed against the surface of the substrate 11 that is opposite to the side on which the resin layer 35 is provided to thereby prevent thermal defects in the substrate 11.

[Effects]

In the first embodiment, the anti-smudge layer 12 contains at least one of the first compound having an ester linkage in a portion other than its terminal ends and the second compound having a cyclic hydrocarbon group, and a plurality of structure bodies 12a are provided on the fingerprint resistant surface S of the anti-smudge layer 12. Therefore, when fingerprints adhere to the fingerprint resistant surface S of the anti-smudge substrate, the fingerprint patterns spread spontaneously and the adhering fingerprints become less noticeable. Since the fingerprint resistant surface S has shape fluctuations, spectral dispersion can be prevented.

Fingerprints adhering to the fingerprint resistant surface S of the anti-smudge substrate can be made less noticeable by rubbing the fingerprints with, for example, a finger to spread them thinly. Therefore, the ease of wiping off fingerprints with a finger etc. can be improved. When the anti-smudge substrate or its anti-smudge layer 12 is applied to an electronic device such as an input device or a display device, fingerprints can become less noticeable over time during use of the device. Therefore, an electronic device having high fingerprint resistance can be provided.

[Modifications]

In the first embodiment described above, the example of the configuration in which the anti-smudge layer 12 contains both the second compound having a cyclic hydrocarbon group and the third compound having a chain hydrocarbon group at a terminal end has been described. However, the present technique is not limited to this example. A configuration in which the anti-smudge layer 12 contains a fourth compound having a cyclic hydrocarbon group and a chain hydrocarbon group at a terminal end may be employed. Also in this case, the ease of wiping off fingerprints similar to that in the first embodiment described above can be obtained.

In the example of the configuration described in the above first embodiment, the anti-smudge layer 12 is provided adjacent to the surface of the substrate 11, but the configuration of the anti-smudge substrate is not limited to this example. Modifications of the anti-smudge substrate will next be described.

(First modification)

FIG. 7A is a cross-sectional view illustrating an example of a configuration of an anti-smudge substrate according to a first modification. As shown in FIG. 7A, this anti-smudge substrate is different from the anti-smudge substrate according to the first embodiment in that an anchor layer 13 provided between the substrate 11 and the anti-smudge layer 12 is further included. When the anchor layer 13 provided between the substrate 11 and the anti-smudge layer 12 is included as described above, the adhesion between the substrate 11 and the anti-smudge layer 12 can be improved. A plurality of structure bodies 12a may be formed by providing a fine irregular structure on the surface of the anchor layer 13 and forming an anti-smudge layer 12 so as to conform to the irregular structure.

The material of the anchor layer 13 used can be selected from, for example, a wide variety of known natural macromolecular resins and synthetic macromolecular resins. For example, transparent thermoplastic resins and transparent curable resins that are cured by heat or irradiation with ionizing radiation can be used as the above resins. Examples of the usable thermoplastic resin may include polyvinyl chloride, vinyl chloride-vinyl acetate copolymers, polymethyl methacrylate, nitrocellulose, chlorinated polyethylene, chlorinated polypropylene, ethyl cellulose, and hydroxypropyl methyl cellulose. Examples of the usable transparent curable resin may include methacrylates, melamine acrylate, urethane acrylate, isocyanates, epoxy resin, and polyimide resin. The ionizing radiation used may be light (for example, ultraviolet rays or visible light), gamma rays, or an electron beam, and ultraviolet rays are preferred from the viewpoint of a production facility.

The material of the anchor layer 13 may further contain an additive. Examples of the additive may include a surfactant, a viscosity modifier, a dispersant, a curing-accelerating catalyst, a plasticizer, and stabilizers such as an antioxidant and an anti-sulfuration agent.

(Second modification)

FIG. 7B is a cross-sectional view illustrating an example of a configuration of an anti-smudge substrate according to a second modification. As shown in FIG. 7B, this anti-smudge substrate is different from the anti-smudge substrate according to the first embodiment in that a hard coating layer 14 provided between the substrate 11 and the anti-smudge layer 12 is further included. It is particularly preferable to provide the hard coating layer 14 when the substrate 11 used is a resin substrate such as a plastic film. When the hard coating layer 14 is included between the substrate 11 and the anti-smudge layer 12 as described above, practical properties (such as durability and pencil hardness) can be improved. A plurality of structure bodies 12a may be formed by providing a fine irregular structure on the surface of the hard coating layer 14 and forming an anti-smudge layer 12 so as to conform to the irregular structure.

The material of the usable hard coating layer 14 can be selected from, for example, a wide variety of known natural macromolecular resins and synthetic macromolecular resins. For example, transparent thermoplastic resins and transparent curable resins that are cured by heat or irradiation with ionizing radiation can be used as the above resins. Examples of the usable thermoplastic resins may include polyvinyl chloride, vinyl chloride-vinyl acetate copolymers, polymethyl methacrylate, nitrocellulose, chlorinated polyethylene, chlorinated polypropylene, ethyl cellulose, and hydroxypropyl methyl cellulose. Examples of the usable transparent curable resin may include methacrylates, melamine acrylate, urethane acrylate, isocyanates, epoxy resin, and polyimide resin. The ionizing radiation used may be an electron beam, light (for example, ultraviolet rays or visible light), gamma rays, or an electron beam, and ultraviolet rays are preferred from the viewpoint of a production facility.

The material of the hard coating layer 14 may further contain an additive. Examples of the additive may include a surfactant, a viscosity modifier, a dispersant, a curing-accelerating catalyst, a plasticizer, and stabilizers such as an antioxidant and an anti-sulfuration agent. The hard coating layer 14 may further contain light-scattering particles such as an organic resin filler that scatter light, in order to impart an AG (Anti-Glare) function to the fingerprint resistant surface S. In this case, the light-scattering particles may protrude from the surface of the hard coating layer 14 or the fingerprint resistant surface S of the anti-smudge layer 12 or may be covered with a resin contained in the hard coating layer 14 or the anti-smudge layer 12. The light-scattering particles may or may not be in contact with the substrate 11, which is a lower layer. Both the hard coating layer 14 and the anti-smudge layer 12 may further contain light-scattering particles. Instead of or in addition to the AG (Anti-Glare) function, an AR (Anti-Reflection) function may be imparted to the anti-smudge substrate. The AR (Anti-Reflection) function can be imparted by, for example, forming an AR layer on the hard coating layer 14. The AR layer used may be, for example, a single low-refractive index layer film or a multilayer film formed by alternately stacking low-refractive index layers and high-refractive index layers.

(Third modification)

FIG. 7C is a cross-sectional view illustrating an example of a configuration of an anti-smudge substrate according to a third modification. As shown in FIG. 7C, this anti-smudge substrate is different from the anti-smudge substrate according to the first embodiment in that a hard coating layer 14 provided between the substrate 11 and the anti-smudge layer 12 and an anchor layer 13 provided between the substrate 11 and the hard coating layer 14 are further included. It is particularly preferable to provide the hard coating layer 14 when the substrate 11 used is a resin substrate such as a plastic film.

(Fourth modification)

FIG. 8A is a cross-sectional view illustrating an example of a configuration of an anti-smudge substrate according to a fourth modification. As shown in FIG. 8A, this anti-smudge substrate is different from the anti-smudge substrate according to the first embodiment in that hard coating layers 14 are further provided on the respective surfaces of the substrate 11. The anti-smudge layer 12 is provided on the surface of one of the hard coating layers 14 provided on the

respective surfaces of the substrate 11. It is particularly preferable to provide the hard coating layers 14 when the substrate 11 used is a resin substrate such as a plastic film.

(Fifth modification)

FIG. 8B is a cross-sectional view illustrating an example of a configuration of an anti-smudge substrate according to a fifth modification. As shown in FIG. 8B, this anti-smudge substrate is different from the anti-smudge substrate according to the first embodiment in that anchor layers 13 and hard coating layers 14 are further provided on the respective surfaces of the substrate 11. Each anchor layer 13 is provided between the substrate 11 and the hard coating layer 14. The anti-smudge layer 12 is provided on the surface of one of the hard coating layers 14 provided on the respective surfaces of the substrate 11. It is particularly preferable to provide the hard coating layers 14 when the substrate 11 used is a resin substrate such as a plastic film.

(Sixth modification)

FIG. 8C is a cross-sectional view illustrating an example of a configuration of an anti-smudge substrate according to a sixth modification. This anti-smudge substrate is an anti-smudge transparent conductive substrate and is different from the anti-smudge substrate according to the first embodiment in that a transparent conductive layer 15 is further provided on the surface of the substrate 11 that is opposite to the anti-smudge layer 12, as shown in FIG. 8C. The transparent conductive layer 15 may be a transparent electrode having a prescribed electrode pattern. Examples of the electrode pattern may include, but are not limited to, a stripe pattern. An over-coating layer may be further provided on the surface of the transparent conductive layer 15, if necessary. A hard coating layer and/or an anchor layer may be further provided between the substrate 11 and the transparent conductive layer 15, if necessary.

The material used for the transparent conductive layer 15 may be, for example, at least one selected from the group consisting of electrically conductive metal oxide materials, electrically conductive metal materials, electrically conductive carbon materials, and conductive polymers. Examples of the metal oxide materials may include indium tin oxide (ITO), zinc oxide, indium oxide, antimony-doped tin oxide, fluorine-doped tin oxide, aluminum-doped zinc oxide, gallium-doped zinc oxide, silicon-doped zinc oxide, zinc oxide-tin oxide based materials, indium oxide-tin oxide based materials, and zinc oxide-indium oxide-magnesium oxide based materials. The metal material used may be, for example, a metal nano-filler such as metal nanoparticles and metal nanowires. Specific examples of the metal material may include: metals such as copper, silver, gold, platinum, palladium, nickel, tin, cobalt, rhodium, iridium, iron, ruthenium, osmium, manganese, molybdenum, tungsten, niobium, tantalum, titanium, bismuth, antimony, and lead; and alloys of these metals. Examples of the carbon materials may include carbon black, carbon fibers, fullerenes, graphene, carbon nanotubes, carbon microcoils, and carbon nanohorns. Examples of the conductive polymers may include substituted or unsubstituted polyaniline, substituted or unsubstituted polypyrrole, substituted or unsubstituted polythiophene, and (co)polymers composed of one or two selected from these polymers.

The method used to form the transparent conductive layer 15 may be, for example, a PVD method such as a sputtering method, a vacuum deposition method, or an ion plating method, a CVD method, a coating method, or a printing method, but the method used is not limited thereto.

<2. Second embodiment>

FIG. 9A is a cross-sectional view illustrating an example of a configuration of an anti-smudge substrate according to the second embodiment of the present technique. FIG. 9B is an enlarged cross-sectional view of part of FIG. 9A. As shown in FIGs. 9A and 9B, this anti-smudge substrate is different from that in the first embodiment in that a substrate 21 is formed integrally with a plurality of structure bodies 22. The material used for the substrate 21 and the structure bodies 22 is the same as the material for the anti-smudge layer 12 in the first embodiment described above. Specifically, it is preferable to use a material containing a thermoplastic resin composition as the material of the substrate 21 and the structure bodies 22. Preferably, in this case, the thermoplastic resin composition contains at least one of the first compound and the second compound. The substrate 21 and the structure bodies 22 are the same as the substrate 11 and the structure bodies 12a in the first embodiment described above except for the material constituting them.

The method used to produce the anti-smudge substrate may be, for example, a melt extrusion method, a transfer method, etc. The melt extrusion method used may be, for example, a method in which, immediately after the thermoplastic resin composition is discharged from a die into a film shape, the thermoplastic resin composition is nipped between two rolls to transfer the surface shape of the roll to the resin material. One of the two rolls used may be a master roll, which will be described later. The transfer method used may be, for example, a thermal transfer method in which the molding surface of a master is pressed against the substrate and the substrate is heated to near its glass transition point or to a temperature equal to or higher than the glass transition point to thereby transfer the shape of the molding

surface of the master. The master used may be the plate-shaped master 31 in the first embodiment described above.

[Effects]

In the second embodiment, the substrate 21 and the plurality of structure bodies 22 are formed integrally with each other, so that the configuration of the anti-smudge substrate can be simplified. When the substrate 21 and the plurality of structure bodies 22 are transparent, reflection from the interface between the substrate 21 and the plurality of structure bodies 22 can be suppressed.

<3. Third embodiment>

[Configuration of anti-smudge substrate]

FIG. 10A is a cross-sectional view illustrating an example of a configuration of an anti-smudge substrate according to a third embodiment of the present technique. FIG. 10B is an enlarged cross-sectional view of part of FIG. 10A. This anti-smudge substrate includes a substrate 11 and an anti-smudge structure layer 23 provided on the surface of the substrate 11. The anti-smudge structure layer 23 includes a fine structure layer 24 provided on the surface of the substrate 11 and an anti-smudge layer 25 provided on the fine structure surface of the fine structure layer 24. In the third embodiment, the same portions as those in the first embodiment are denoted by the same reference numerals, and the description thereof is omitted.

A plurality of surface structure bodies (first structure bodies) 23a are provided on the fingerprint resistant surface S of the anti-smudge layer 25. A plurality of inner structure bodies (second structure bodies) 24a are provided on the surface of the fine structure layer 24. The surface structure bodies 23a are configured by disposing the anti-smudge layer 25 so as to conform to the inner structure bodies 24a. The arrangement, shape, pitch (average pitch), and arithmetic mean roughness, etc. of the surface structure bodies 23a are the same as those of the structure bodies 12a in the first embodiment described above. If necessary, the fine structure layer 24 may further include a base layer 24b between the surface of the substrate 11 and the inner structure bodies 24a. This anti-smudge substrate may have a configuration in which the substrate 11 and the fine structure layer 24 are integrally formed with each other.

The material of the anti-smudge layer 25 is the same as the material of the anti-smudge layer 12 in the first embodiment. The fine structure layer 24 may be a functional layer such as an anchor layer or a hard coating layer. The material used for the fine structure layer 24 may be at least one of an energy ray-curable resin composition, a thermosetting resin composition, and a thermoplastic resin composition. The thickness of the anti-smudge layer 25 is selected such that, for example, when the anti-smudge layer 25 is formed on the surface of the fine structure layer 24, the shape of the inner structure bodies 24a is not embedded in the fine structure layer 24. Specifically, the thickness of the anti-smudge layer 25 is, for example, equal to or larger than a monomolecular thickness and 10 μm or smaller, preferably equal to or larger than the monomolecular thickness and 1 μm or smaller, and particularly preferably equal to or larger than the monomolecular thickness and 100 nm or smaller.

[Method of producing anti-smudge substrate]

Next, a method of producing the anti-smudge substrate having the above-described configuration will be described.

First, the inner structure bodies 24a are formed on the surface of the substrate 11 in the same manner as in the first embodiment described above except that a conventionally known energy ray-curable resin or thermosetting resin not containing any of the above described first compound and second compound is used. However, the height, aspect ratio, etc. of the inner structure bodies 24a are set such that the height, aspect ratio, etc. of the surface structure bodies 23a formed in the subsequent step become the same as those of the structure bodies 12a in the first embodiment described above. In this step, a base layer 24b may be provided between the surface of the substrate 11 and the inner structure bodies 24a, if necessary.

Next, a resin composition containing at least one of the first compound having an ester linkage in a portion other than its terminal ends and the second compound having a cyclic hydrocarbon group is prepared. This resin composition used may be the same resin composition as that used to form the anti-smudge layer 12 in the first embodiment described above.

Next, the prepared resin composition is applied to or printed onto the surface of the substrate 11 having the plurality of inner structure bodies 24a provided thereon. In this case, the resin composition is applied or printed so as to conform to the surface shape of the inner structure bodies 24a. When the next step includes a drying step, the resin composition may conform to the surface shape of the inner structure bodies 24a after the drying step. Next, if necessary, the resin composition is dried and then cured. The anti-smudge layer 25 is thereby formed on the plurality of inner

structure bodies 24a so as to conform to the surface of these inner structure bodies 24a. Specifically, a fingerprint resistant surface S with the plurality of surface structure bodies 23a is formed on the surface of the substrate 11. The intended anti-smudge substrate is obtained in the manner described above.

[Effects]

In the third embodiment, the anti-smudge layer 25 is provided so as to conform to the plurality of inner structure bodies 24a of the fine structure layer 24, and the plurality of surface structure bodies 23a are formed on the fingerprint resistant surface S. Therefore, the same effects as those of the first embodiment described above can be obtained.

<4. Fourth embodiment>

FIGs. 11A to 11C are schematic diagrams illustrating examples of configurations of an anti-smudge substrate according to a fourth embodiment of the present technique. The anti-smudge substrate according to the fourth embodiment is different from the anti-smudge substrate according to the third embodiment in that an adsorption compound 25a is adsorbed on the surface of the inner structure bodies 24a to thereby form an anti-smudge layer 25. A functional layer (such as an anchor layer or a hard coating layer) other than the anti-smudge layer 25 may be provided on the surface of the substrate 11. The anti-smudge layer 25 is, for example, a monomolecular layer formed from the adsorption compound 25a. The region on which the adsorption compound 25a is adsorbed is not limited to one of the surfaces of the substrate 11 where the inner structure bodies 24a are provided, and the adsorption compound 25a may be adsorbed on both the surfaces of the substrate 11 or part of the surfaces. The adsorption compound 25a may be adsorbed selectively on a surface or a predetermined region that are frequently touched with a hand, a finger, etc.

The site of the adsorption compound 25a that is adsorbed on the surface of the inner structure bodies 24a may be any of the terminal ends of the side and main chains of the adsorption compound 25a, and both a terminal end of a side chain and a terminal end of the main chain may be adsorbed on the surface of the substrate 11. FIG. 11A shows a configuration in which one terminal end of the main chain of the adsorption compound 25a is adsorbed on the surface of the inner structure bodies 24a. FIG. 11B shows a configuration in which terminal ends of side chains of the adsorption compound 25a are adsorbed on the surface of the inner structure bodies 24a. FIG. 11C shows a configuration in which the main chain of the adsorption compound 25a is adsorbed on the surface of the inner structure bodies 24a. The adsorption may be any of physical adsorption and chemical adsorption. From the viewpoint of durability, chemical adsorption is preferred. Specific examples of the adsorption may include adsorption through an acid-base reaction, a covalent bond, an ionic bond, a hydrogen bond, etc.

The adsorption compound 25a used may be prepared by adding an adsorption group that adsorbs on the surface of the substrate 11 to, for example, the first and second compounds in the first embodiment described above. The position at which the adsorption group is attached may be any of the terminal ends and side chains of the adsorption compound 25a, and a plurality of adsorption groups may be added to one molecule of the adsorption compound 25a.

Any adsorption group may be used so long as it can be adsorbed to the inner structure bodies 24a. Specific examples of the adsorption group may include a sulfo group (including sulfonates), a sulfonyl group, a carboxylic acid group (including carboxylates), an amino group, a phosphoric acid group (including phosphates and phosphoric esters), a phosphino group, an epoxy group, an isocyanate group, and a thiol group. It is sufficient that at least one such adsorption group be present in the adsorption compound 25a.

A compound having, in its molecule, a structure represented by the formula (7) below can be used as the first compound having an adsorption group.

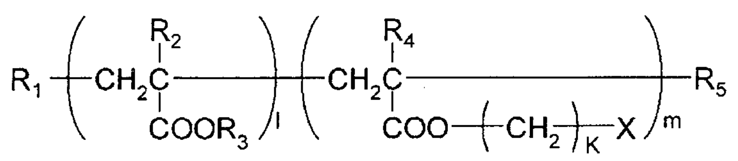

. . . (7)

(In the formula (7), X is, for example, a sulfo group (including a sulfonate), a sulfonyl group, a carboxylic acid group (including a carboxylate), an amino group, a phosphoric acid group (including a phosphate and a phosphoric ester), a phosphino group, an epoxy group, an isocyanate group, a thiol group, and the like.)

A compound having, in its molecule, a structure represented by the formula (8) below can be used as the second compound having an adsorption group.

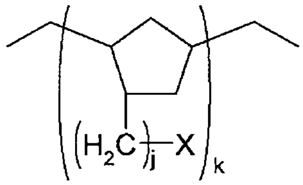

· · · (8)

(In the formula (8), X is, for example, a sulfo group (including a sulfonate), a sulfonyl group, a carboxylic acid group (including a carboxylate), an amino group, a phosphoric acid group (including a phosphate and a phosphoric ester), a phosphino group, an epoxy group, an isocyanate group, a thiol group, and the like.)

A compound having, in its molecule, a structure represented by the formula (9) below can be used as the third compound having an adsorption group.

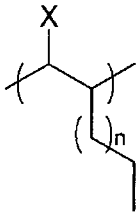

· · · (9)

(In the formula (9), X is, for example, a sulfo group (including a sulfonate), a sulfonyl group, a carboxylic acid group (including a carboxylate), an amino group, a phosphoric acid group (including a phosphate and a phosphoric ester), a phosphino group, an epoxy group, an isocyanate group, a thiol group, and the like.)

[Method of producing anti-smudge substrate]

A description will next be given of an example of a method of producing the anti-smudge substrate using a wet process.

(Preparation of processing solution)

First, the adsorption compound 25a is dissolved in a solvent to prepare a processing solution. When the adsorption compound 25a is liquid at room temperature or is subjected to, for example, heat treatment to obtain the adsorption compound 25a in a liquid state, the adsorption compound 25a may be used as it is without dissolving in a solvent. When the processing solution comes close to the surface of the inner structure bodies 24a, the adsorption compound 25a is adsorbed on the surface. The adsorption rate increases as the amount of the adsorption compound in the processing solution increases. Therefore, the higher the concentration of the compound is, the more it is preferred. Specifically, the concentration of the compound is preferably 0.01% by mass or more.

The solvent used may be appropriately selected from those that can dissolve the adsorption compound 25a at a prescribed concentration. More specifically, the solvent used is, for example, one or a mixture of two or more of: aromatic-based solvents such as toluene and xylene; alcohol-based solvents such as methyl alcohol, ethyl alcohol, n-propyl alcohol, iso-propyl alcohol, n-butyl alcohol, iso-butyl alcohol, and propylene glycol monomethyl ether; ester-based solvents such as methyl acetate, ethyl acetate, butyl acetate, and cellosolve acetate; ketone-based solvents such as acetone, methyl ethyl ketone, methyl isobutyl ketone, and cyclohexanone; glycol ethers such as 2-methoxyethanol, 2-ethoxyethanol, 2-butoxyethanol, ethylene glycol dimethyl ether, ethylene glycol diethyl ether, diethylene glycol dimethyl ether, and propylene glycol methyl ether; glycol ether esters such as 2-methoxyethyl acetate, 2-ethoxyethyl acetate, 2-butoxyethyl acetate, and propylene glycol methyl ether acetate; chlorine-based solvents such as chloroform, dichloromethane, trichloromethane, and methylene chloride; ether-based solvents such as tetrahydrofuran, diethyl ether, 1,4-dioxane, and 1,3-dioxolane; N-methylpyrrolidone; dimethylformamide; dimethyl sulfoxide; and dimethylacetamide.

(Adsorption)

Next, for example, the substrate 11, which is a processing target, is immersed in the processing solution, or a prescribed amount of the processing solution is applied to or printed on one of or both the surfaces of the substrate 11 used as the processing target.

The coating method used may be, for example, wire bar coating, blade coating, spin coating, reverse roll coating, die coating, spray coating, roll coating, gravure coating, micro-gravure coating, lip coating, air knife coating, curtain

coating, a comma coating method, or a dipping method. The printing method used may be, for example, a letterpress printing method, an offset printing method, a gravure printing method, an intaglio printing method, a rubber plate printing method, an inkjet method, or a screen printing method.

When an immersion method is used, the processing solution in an amount sufficient to allow the substrate 11 used as the processing target to be immersed therein is prepared, and it is preferable that the substrate 11 be immersed in the processing solution for 0.1 seconds to 48 hours. If necessary, after immersion, the substrate 11 may be washed with a good solvent for the adsorption compound 25a to rinse out the unadsorbed adsorption compound 25a. Then the resultant substrate 11 is dried as needed, and the adsorption processing is thereby completed. The drying method may be, for example, any of natural drying and artificial drying using a heating apparatus. When heat treatment and/or ultrasonic treatment is performed during immersion of the substrate 11 used as the processing target, the rate of adsorption of the adsorption compound 25a can be increased.

When a coating method is used, heat treatment and/or ultrasonic treatment may also be performed on the substrate 11 when the processing solution is applied to the substrate 11. If necessary, after application, the substrate 11 may be washed with a good solvent for the adsorption compound 25a to rinse out the unadsorbed adsorption compound 25a. Then the resultant substrate 11 is dried as needed, and the adsorption processing is thereby completed. The drying method may be, for example, any of natural drying and artificial drying using a heating apparatus. It is not necessary to achieve the desired amount of application of the processing solution only by one application step, and the desired amount of application of the processing solution may be achieved by repeating the above application and washing steps a plurality of times.

(Effects)

In the fourth embodiment, the adsorption compound 25a is adsorbed on the surface of the inner structure bodies 24a to form the anti-smudge layer 25 on the surface of the inner structure bodies 24a. Therefore, the same effects as those in the first embodiment described above can be obtained.

[Modification]

In the third and fourth embodiments described above, the method using a wet process has been described as an example of the method of producing the anti-smudge layer 25. The method of producing the anti-smudge layer 25 is not limited to this example, and a dry process can also be used. More specifically, a dry process can be used to form the anti-smudge layer 25 in the third embodiment or the fourth embodiment described above directly on the surface of the inner structure bodies 24a.

The dry process used may be, for example, a sputtering method, a thermal CVD (Chemical Vapor Deposition) method, a plasma CVD method, an ALD (Atomic Layer Deposition) method, an ion plating method, etc.

<5. Fifth embodiment>

A fifth embodiment is different from the first embodiment in that the anti-smudge substrate is produced using a master roll.

[Configuration of master]

FIG. 12A is a perspective view illustrating an example of a configuration of a master roll. FIG. 12B is a cross-sectional view taken along line a-a shown in FIG. 12A. FIG. 12C is an enlarged cross-sectional view representing part of FIG. 12B. The master roll 51 is a master for producing an anti-smudge substrate having the configuration described above and more specifically is a master for molding a plurality of structure bodies 12a on the surface of the substrate described above. The master roll 51 has, for example, a circular columnar or tubular shape, and the circular columnar or tubular surface is a molding surface for molding a plurality of structure bodies 12a on the surface of the substrate. A plurality of structure bodies 52, for example, are provided on the molding surface. The structure bodies 52 are recessed from the molding surface.

The plurality of structure bodies 52 provided on the molding surface of the master roll 51 and the plurality of structure bodies 12a provided on the surface of the substrate 11 described above have an inverted concave-convex relationship with each other. In other words, the arrangement, size, shape, arrangement pitch, height, etc. of the structure bodies 52 of the master roll 51 are the same as those of the structure bodies 12a of the substrate 11.

[Configuration of laser processing apparatus]

FIG. 13 is a schematic diagram illustrating an example of a configuration of a laser processing apparatus used to produce the master roll. The laser processing apparatus is the same as that in the first embodiment described above except that a configuration for rotating the master roll 51 is provided instead of the linear stage 44.

[Method of producing anti-smudge substrate]

FIGs. 14A to 16B are process diagrams illustrating an example of the method of producing the anti-smudge substrate according to the fifth embodiment in the present technique. In the fifth embodiment, the same portions as those in the first or third embodiment are denoted by the same reference numerals, and the description thereof is omitted.

(Laser processing step)

First, as shown in FIG. 14A, a circular columnar or tubular master roll 51 is prepared. A surface 51A of the master roll 51, i.e., the surface to be processed, is, for example, mirror-polished. The surface 51A may not be mirror-polished. For example, irregularities finer than the pattern for transfer may be formed on the surface 51A, or irregularities similar to or coarser than the pattern for transfer may be formed on the surface 51A.

Next, the laser processing apparatus shown in FIG. 13 is used to subject the surface 51A of the master roll 51 to laser processing in the following manner. First, a pattern is drawn on the surface 51A of the master roll 51 using an ultrashort pulse laser, a so-called femtosecond laser, with a pulse width of 1 picosecond ($10^{-12}$ second) or shorter. For example, as shown in FIG. 14B, the surface 51A of the master roll 51 is irradiated with a femtosecond laser beam Lf, and the irradiation spot is scanned on the surface 51A.

In this case, by appropriately setting the laser wavelength, the frequency of repetition, the pulse width, the shape of the beam spot, the polarization, the intensity of the laser beam with which the surface 51A is irradiated, the scanning rate of the laser beam, etc., a plurality of structure bodies 52 having a desired shape are formed, as shown in FIG. 14C.

(Structure forming step)

Next, the master roll 51 obtained as described above is used to perform shape transfer onto a resin material. A plurality of structure bodies 12a are thereby formed on the surface of the substrate 11, whereby the above-described anti-smudge substrate according to the first embodiment is produced. The shape transfer method used may be, for example, an energy ray transfer method, a thermosetting transfer method, or a thermal transfer method. Hereinafter, the structure forming step will be described for two different cases, i.e., a structure forming step using the energy ray transfer method or the thermosetting transfer method and a structure forming step using the thermal transfer method.

[Structure forming step using energy ray transfer method or thermosetting transfer method]

(Step of preparing resin composition)

FIGs. 15A and 15B are process diagrams illustrating an example of the structure forming step using the energy ray transfer method or the thermosetting transfer method. First, if necessary, a resin composition is dissolved in a solvent to dilute the resin composition. In this case, various additives may be added to the resin composition as required. The dilution with the solvent is performed as required. When no dilution is necessary, the resin composition may be used without any solvent.

(Application step)

Next, the prepared resin composition 33 is applied to or printed on the surface of a substrate as shown in FIG. 15A.

(Drying step)

Next, if the resin composition 33 contains a solvent, the resin composition is dried to volatilize the solvent, as necessary.

(Curing step)

Next, the master roll 51 and the resin composition 33 applied to the surface of the substrate 11 are brought into close contact with each other, and the resin composition 33 is cured. Then the substrate 11 integrated with the cured resin composition 33 is peeled off the master roll 51. In this manner, an anti-smudge substrate in which a plurality of structure bodies 12a are formed on the surface of the substrate 11 is obtained. In this case, a base layer 12b may be further formed between the structure bodies 12a and the substrate 11, if necessary. (See FIG. 1C.)

Different curing methods are used for different types of resin compositions 33. When the resin composition 33 used is an energy ray-curable resin composition, the master roll 51 is pressed against the resin composition 33 to bring them into close contact with each other, and then the resin composition 33 is irradiated with energy rays such as ultraviolet rays (ultraviolet light) from an energy ray source 34 to thereby cure the resin composition 33.

When the substrate 11 is formed of a material that does not transmit energy rays such as ultraviolet rays, the master roll 51 may be formed of a material (for example, quartz) that can transmit the energy rays, and the resin composition 33 may be irradiated with the energy rays from the inner side of the master roll 51.

When the resin composition 33 used is a thermosetting resin composition, the master roll 51 is pressed against the resin composition 33 to bring them into close contact with each other, and then the resin composition 33 is heated to its curing temperature using the master roll 51 to thereby cure the resin composition 33. In this case, a cooling roll may be pressed against the surface of the substrate 11 that is opposite to the side onto which the resin composition 33 is applied or printed to thereby prevent thermal defects in the substrate 11. The master roll 51 includes a heat source such as a heater disposed thereinside and is therefore configured so as to be capable of heating the resin composition 33 in close contact with the molding surface of the master roll 51.

[Structure forming step using thermal transfer method]

FIGs. 16A and 16B are process diagrams illustrating an example of the structure forming step using the thermal transfer method. First, as shown in FIG. 16A, a substrate 21 is formed. The substrate 21 contains, for example, a thermoplastic resin composition. The thermoplastic resin composition contains at least one of the first compound and the second compound. When the thermoplastic resin composition contains the second compound, it is preferable that the thermoplastic resin composition further contain the third compound together with the second compound.

Next, as shown in FIG. 16B, the master roll 51 is pressed against the substrate 21 to bring them into close contact with each other. At the same time, the substrate 21 is heated to near its glass transition point or to a temperature equal to or higher than the glass transition point to transfer the shape of the molding surface of the master roll 51. Next, the substrate 21 with the shape transferred thereto is peeled off the master roll 51. An anti-smudge substrate in which a plurality of structure bodies 22 are formed on the surface of the substrate 21 is thereby obtained. In this case, a cooling roll may be pressed against the surface of the substrate 21 that is opposite to the side on which the plurality of structure bodies 22 are formed to thereby prevent thermal defects in the substrate 21.

In the description of the example of the thermal transfer described above, the master roll 51 is pressed against the substrate 21 to form the structure bodies 22 on the surface of the substrate 21, but the example of the thermal transfer is not limited thereto. For example, as in the transfer method in the first embodiment described above, a resin layer 35 may be formed on the surface of the substrate 11, and the master roll 51 may be pressed against the resin layer 35 to form structure bodies 12a on the surface of the resin layer 35.

[Effects]

In the fifth embodiment, since the master used is the master roll 51, the anti-smudge substrate can be produced using, for example, a roll-to-roll process. Therefore, the productivity of the anti-smudge substrate can be improved.

<6. Sixth embodiment>

FIG. 17 is a perspective view illustrating an example of a configuration of a display device according to a sixth embodiment of the present technique. As shown in FIG. 17, an anti-smudge body 100 is provided on a display surface $S_1$ of the display device 101. Examples of the anti-smudge body 100 used may include an anti-smudge layer, an anti-smudge structure layer, and an anti-smudge substrate. Examples of the anti-smudge layer used may include the anti-smudge layer 12 according to the first embodiment. Examples of the anti-smudge structure layer used may include the anti-smudge structure layer 23 according to the third or fourth embodiment. Examples of the anti-smudge substrate used may include the anti-smudge substrates according to the first to the fourth embodiments. When the anti-smudge substrate is used as an anti-smudge body, a configuration in which the anti-smudge substrate is bonded to the display surface $S_1$ of the display device 101 through a bonding layer can be used. When this configuration is used, it is preferable to use,

for example, a transparent and flexible sheet as the substrate 11 of the anti-smudge substrate.

The display device 101 used may be any of various display devices such as a liquid crystal display, a CRT (Cathode Ray Tube) display, a plasma display (Plasma Display Panel: PDP), an electro luminescent (Electro Luminescence: EL) display, and a surface-conduction electron-emitter display (Surface-conduction Electron-emitter Display: SED).

[Effects]

In the sixth embodiment, since the display surface $S_1$ of the display device 101 can serve as the fingerprint resistant surface S, fingerprints adhering to the display surface $S_1$ of the display device 101 can be made less noticeable by allowing the fingerprint patterns to spontaneously spread. Therefore, the visibility of the display device 101 can be improved.

Fingerprints adhering to the display surface $S_1$ of the display device 101 can be made less noticeable by rubbing the fingerprints with, for example, a finger to spread them thinly. Therefore, the visibility of the display device 101 can be further improved.

<7. Seventh embodiment>

FIG. 18A is a perspective view illustrating an example of a configuration of a display device according to a seventh embodiment of the present technique. As shown in FIG. 18A, an input device 102 is provided on the display surface $S_1$ of the display device 101. An anti-smudge body 100 is provided on an input surface $S_2$ of the input device 102. The display device 101 and the input device 102 are bonded to each other through a bonding layer formed of, for example, an adhesive. Examples of the anti-smudge body 100 used may include an anti-smudge layer, an anti-smudge structure layer, and an anti-smudge substrate. Examples of the anti-smudge layer used may include the anti-smudge layer 12 according to the first embodiment. Examples of the anti-smudge structure layer used may include the anti-smudge structure layer 23 according to the third or fourth embodiment. Examples of the anti-smudge substrate used may include the anti-smudge substrates according to the first to the fourth embodiments. When the anti-smudge substrate is used as an anti-smudge body, a configuration in which the anti-smudge substrate is bonded to the input surface $S_2$ of the input device 102 through a bonding layer can be used. When this configuration is used, it is preferable to use, for example, a transparent and flexible sheet as the substrate 11 of the anti-smudge substrate.

The input device 102 is, for example, a resistive film or capacitive touch panel, but is not limited thereto. Examples of the resistive film touch panel may include a matrix resistive film touch panel. Examples of the capacitive touch panel may include a projection capacitive touch panel of the Wire Sensor type and a projection capacitive touch panel of the ITO Grid type.

[Effects]

In the seventh embodiment, the input surface $S_2$ of the input device 102 can serve as the fingerprint resistant surface S, so that fingerprints adhering to the input surface $S_2$ of the input device 102 can be made less noticeable by allowing the fingerprint patterns to spontaneously spread. Therefore, the visibility of the display device 101 equipped with the input device 102 can be improved.

Fingerprints adhering to the input surface $S_2$ of the input device 102 can be made less noticeable by rubbing the fingerprints with, for example, a finger to spread them thinly. Therefore, the visibility of the display device 101 provided with the input device 102 can be further improved.

[Modification]

FIG. 18B is an exploded perspective view illustrating an example of a modification of the input device according to the seventh embodiment of the present technique. As shown in FIG. 18B, a front panel (surface member) 103 may be provided on the input surface $S_2$ of the input device 102. In this case, an anti-smudge body 100 is provided on a panel surface $S_3$ of the front panel 103. The input device 102 and the front panel (surface member) 103 are bonded to each other through a bonding layer formed of, for example, an adhesive.

<8. Eighth embodiment>

An electronic device according to an eighth embodiment of the present technique includes a display device 101 according to the sixth embodiment, the seventh embodiment, or its modification. If necessary, an anti-smudge body is provided on the surface of the casing of this electronic device. Examples of the anti-smudge body used may include

an anti-smudge layer, an anti-smudge structure layer, and an anti-smudge substrate. Examples of the anti-smudge layer used may include the anti-smudge layer 12 according to the first embodiment. Examples of the anti-smudge structure layer used may include the anti-smudge structure layer 23 according to the third or fourth embodiment. Examples of the anti-smudge substrate used may include the anti-smudge substrates according to the first to the fourth embodiments. The anti-smudge substrate itself may form the casing of the electronic device.

An example of the electronic device according to the eighth embodiment of the present technique will next be described.

FIG. 19A is an external view illustrating a television set, which is an example of the electronic device. The television set 111 includes a casing 112 and a display device 113 contained in the casing 112. The display device 113 is a display device 101 according to the sixth embodiment, the seventh embodiment, or its modification. If necessary, an anti-smudge body may be provided on the surface of the casing 112, or the casing 112 itself may be formed from an anti-smudge substrate.

FIG. 19B is an external view illustrating a notebook-type personal computer, which is an example of the electronic device. The notebook-type personal computer 121 includes a computer main body 122 and a display device 125. The computer main body 122 and the display device 125 are contained in a casing 123 and a casing 124, respectively. The display device 125 is a display device 101 according to the sixth embodiment, the seventh embodiment, or its modification. If necessary, an anti-smudge body may be provided on the surfaces of the casing 123 and the casing 124, and the casing 123 and the casing 124 themselves may be formed from an anti-smudge substrate.

FIG. 20A is an external view illustrating a cellular phone, which is an example of the electronic device. The cellular phone 131 is a so-called smart phone, and includes a casing 132 and a display device 133 contained in the casing 132. The display device 133 is a display device 101 according to the seventh embodiment, or its modification. If necessary, an anti-smudge body may be provided on the surface of the casing 132, or the casing 132 itself may be formed from an anti-smudge substrate.

FIG. 20B is an external view illustrating a tablet-type computer, which is an example of the electronic device. The tablet-type computer 141 includes a casing 142 and a display device 143 contained in the casing 142. The display device 143 is a display device 101 according to the seventh embodiment, or its modification. If necessary, an anti-smudge body may be provided on the surface of the casing 142, or the casing 142 itself may be formed from an anti-smudge substrate.

[Effects]

In the eighth embodiment, the electronic device includes the display device 101 according to the sixth embodiment, the eighth embodiment, or its modification, so that the visibility of the display device 101 of the electronic device can be improved.

When an anti-smudge body is provided on the surface of the casing of the electronic device, if fingerprints adhere to the surface of the casing of the electronic device, the fingerprint patterns spontaneously spread thinly and the adhering fingerprints become less noticeable. Therefore, smudges on the surface of the casing can be made less noticeable. Fingerprints adhering to the surface of the casing of the electronic device can be made less noticeable by rubbing the fingerprints with, for example, a finger to spread them thinly. Therefore, the smudges on the surface of the casing can be made further less noticeable.

[Examples]

The present technique will next be specifically described by way of Examples. However, the present technique is not limited only to these Examples.

In the Examples, the laser processing apparatus shown in FIG. 3 was used. The main body 40 of the laser used was IFRIT (product name) manufactured by Cyber Laser Inc. The laser wavelength was 800 nm, the frequency of repetition was 1,000 Hz, and the pulse width was 220 fs.

(Examples 1 to 4)

First, the surface of a substrate was coated with DLC to produce a master. Next, a fine irregular structure was formed on the surface of the DLC film of the master using a femtosecond laser. In this case, the laser processing was performed under laser processing conditions shown in TABLE 1. A plate-shaped master for shape transfer was thereby obtained. The size of the master was a rectangle of 2 cm x 2 cm.

Next, the master obtained in the manner described above was used to form a fine irregular structure on the surface of a ZEONOR film (registered trademark, manufactured by ZEON CORPORATION) by UV imprinting. Specifically, the master obtained in the manner described above was brought into contact with the ZEONOR film coated with

an ultraviolet-curable resin composition (hereinafter referred to as a "UV-curable resin") having a chemical composition described below. The UV-curable resin was cured by UV irradiation, and then the resultant ZEONOR film was peeled off. The intended anti-smudge film was thereby obtained.

(Chemical composition of UV-curable resin)

Compound having a structure represented by the formula (10) below: 95% by mass
Photo-polymerization initiator (product name: IRGACURE-184, manufactured by BASF Japan Ltd.): 5% by mass

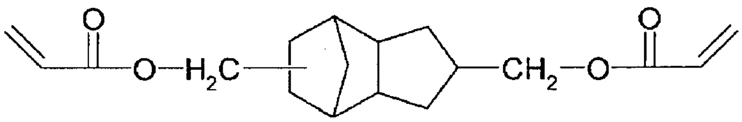 · · · (10)

(the second compound having a cyclic hydrocarbon group)

(Example 5)

First, a fine irregular structure was formed on the surface of a ZEONOR film (registered trademark, manufactured by ZEON CORPORATION) by UV imprinting in the same manner as in Examples 1 to 4 described above. Next, a coating layer was further formed on the surface of the fine irregular structure in the following manner.
The shape-transferred surface of the obtained optical film was spin-coated with a UV-curable resin having a chemical composition described below, and the UV-curable resin was dried to form a coating conforming to a plurality of protrusions on the surface of the optical film. Next, the coating was cured by irradiation with ultraviolet rays to form an anti-smudge layer on the surface. The intended anti-smudge film was thereby obtained.

(Chemical composition of UV curable anti-smudge resin)

Compound having a structure represented by the formula (10) below: 1.5% by mass
Photo-polymerization initiator (product name: IRGACURE-184, manufactured by BASF Japan Ltd.): 0.075% by mass
cyclohexanone: 96.325% by mass

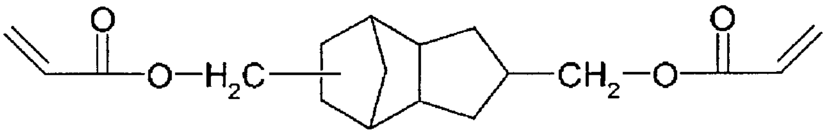 · · · (10)

(the second compound having a cyclic hydrocarbon group)

(Example 6)

An anti-smudge film was produced in the same manner as in Example 5 except that the shape-transferred surface of the optical film was spin-coated with a UV-curable resin having a chemical composition described below. The UV-curable resin used contained the first compound having an ester linkage in a portion other than terminal ends.

(Chemical composition of UV-curable resin)

Dipentaerythritol hexaacrylate (DPHA): 3.5% by mass
Photo-polymerization initiator (product name: IRGACURE-184, manufactured by BASF Japan Ltd.): 0.175% by mass
Cyclohexanone: 96.325% by mass

(Example 7)

An anti-smudge film was produced in the same manner as in Example 5 except that the shape-transferred surface of the optical film was spin-coated with a UV-curable resin having a chemical composition described below. The UV-curable resin used contained the first compound having an ester linkage in a portion other than terminal ends.

(UV-curable resin)

Acrylate oligomer including a fluorine atom and a siloxane moiety: 1.75% by mass
Dipentaerythritol hexaacrylate (DPHA): 1.75% by mass
Photo-polymerization initiator (product name: IRGACURE-184, manufactured by BASF Japan Ltd.): 0.175% by mass
Cyclohexanone: 96.325% by mass

(Comparative Example 1)

An anti-smudge film having a flat surface was obtained by coating the surface of a ZEONOR film with a UV-curable resin and curing the UV-curable resin without shape transfer. The UV-curable resin used was the same as that used in Examples 1 to 7 described above.

[Evaluation]

Each of the above anti-smudge films obtained in Examples 1 to 7 and Comparative Example 1 was evaluated. Specifically, (a) the irregular shape of the transferred surface (surface structures, the average pitch, and the arithmetic mean roughness), (b) AR function, (c) noticeability of fingerprint patterns, and (d) wipeability with a finger were evaluated.

(a) Irregular shape of transferred surface

(Surface structures)

A fingerprint resistant surface having a fine irregular structure was observed under an atomic force microscope (AFM) to examine surface structures. FIGs. 21A, 22A, 23A, 24A, and 25A show AFM images of the surface of the anti-reflective films in Examples 1, 2, 3, 4, and 5, respectively. FIGs. 21B, 22B, 23B, 24B, and 25B show cross-sectional profiles along lines a-a in FIGs. 21A, 22A, 23A, 24A, and 25A, respectively.

(Average pitch)

The average pitch Pm was determined from a cross-sectional profile of an AFM image in the following manner. First, two adjacent structure bodies were arbitrarily selected from a cross-sectional profile of the AFM image, and the distance between the selected structure bodies (the smallest distance between the tops of minimum repeating structures) was determined as a pitch. Next, this procedure was repeated for 10 arbitrary portions on the fingerprint resistant surface to determine pitches P1, P2, ..., P10. Then the pitches P1, P2, ..., P10 are simply averaged (arithmetically averaged) to determine the average pitch Pm.

(Arithmetic mean roughness)

The arithmetic mean roughness Ra was determined from an AFM image in the following manner.
First, the fingerprint resistant surface S is observed under an atomic force microscope (AFM) with a field of view of 3 μm x 3 μm. Next, an arithmetic mean roughness ra is determined from a cross sectional profile of the AFM image. Then this procedure is repeated for 10 arbitrary portions on the fingerprint resistant surface to determine ra1, ra2, ..., ra10. Next, these ra1, ra2, ..., ra10 are simply averaged (arithmetically averaged) to determine the arithmetic mean roughness Ra.

(b) AR function

The AR function of each anti-smudge film was evaluated in the following manner.
The anti-smudge film was bonded to a black acrylic plate (product name: ACRYLITE, manufactured by Mitsubishi Rayon Co., Ltd.) with an evaluation surface (fingerprint resistant surface) of the anti-smudge film facing up using a double-sided adhesive sheet (product name: LUCIACS CS9621T, manufactured by Nitto Denko Corporation). Next, light from the outside was incident on the evaluation surface obliquely at 45°, and evaluation was made according to the following criteria.

C: No difference was noticeable between portions with structures and portions with no structures.
A: The degree of darkness was larger than that in the portions with no structures.
AA: The degree of darkness compared with that in the portions with no structures was larger than that of the evaluation

result "A."

(c) Noticeability of fingerprint patterns

An anti-smudge film was bonded to a black acrylic plate (product name: ACRYLITE, manufactured by Mitsubishi Rayon Co., Ltd.) with the evaluation surface (fingerprint resistant surface) of the anti-smudge film facing up using a double-sided adhesive sheet (product name: LUCIACS CS9621T, manufactured by Nitto Denko Corporation). Next, the fingerprint resistant surface was smudged with fingerprints. After 3 minute, a fluorescent lamp was used to irradiate the fingerprint resistant surface. Then the surface was visually observed, and evaluation was made according to the following criteria.

C: The fingerprint patterns did not disappear.
A: The fingerprint patterns disappeared, and the adhering fingerprints were less noticeable.
AA: The fingerprint patterns disappeared, and the adhering fingerprints were less noticeable than those in the evaluation result "A."

(d) Wipeability with finger

The fingerprint resistant surface was smudged intentionally with fingerprints with a liquid amount larger than usual and wiped back and forth 10 times with a finger. Then a fluorescent lamp was used to irradiate the fingerprint resistant surface. Then the surface was visually observed, and evaluation was made according to the following criteria.

AA: No oily smudges remained.
A: A slight amount of oily smudges remained.
C: A large amount of oily smudges remained.

TABLE 1 shows the material of the master and the laser processing conditions for each of Examples 1 to 7 and Comparative Example 1.

[TABLE 1]

| | | LASER PROCESSING CONDITIONS | | | | | | | |
|---|---|---|---|---|---|---|---|---|---|
| | MATERIAL OF MASTER | WAVELENGTH (nm) | POLARIZATION | P (mW) | Lx (μm) Lateral | Ly (μm) Vertical | v (mm/s) | N | F (J/cm$^2$) |
| EXAMPLE 1 | DLC | 800 | LINEAR | 96 | 300 | 160 | 8 | 20 | 0.2 |
| EXAMPLE 2 | DLC | 800 | LINEAR | 96 | 300 | 160 | 5.33 | 30 | 0.2 |
| EXAMPLE 3 | DLC | 800 | CIRCULAR | 96 | 300 | 160 | 8 | 20 | 0.2 |
| EXAMPLE 4 | DLC | 800 | CIRCULAR | 96 | 300 | 160 | 5.33 | 30 | 0.2 |
| EXAMPLE 5 | DLC | 800 | LINEAR | 96 | 300 | 160 | 8 | 20 | 0.2 |
| EXAMPLE 6 | DLC | 800 | LINEAR | 96 | 300 | 160 | 8 | 20 | 0.2 |
| EXAMPLE 7 | DLC | 800 | LINEAR | 96 | 300 | 160 | 8 | 20 | 0.2 |
| COMPARATIVE EXAMPLE 1 | - | - | - | - | - | - | - | - | - |
| DLC: DIAMOND-LIKE CARBON | | | | | | | | | |

TABLE 2 shows the results of the evaluation each of the anti-smudge films in Examples 1 to 7 and Comparative Example 1.

[TABLE 2]

| | IRREGULAR SHAPE OF TRANSFERRED SURFACE | | | UPPER COATING | AR FUNCTION | NOTICE- ABILITY OF FINGERPRIN T PATTERNS | WIPEABILITY WITH FINGER |
|---|---|---|---|---|---|---|---|
| | STRUCTURES | P*m* (nm) | R*a* (nm) | | | | |
| EXAMPLE 1 | STRIPE | 150 | 21 | - | AA | A | A |
| EXAMPLE 2 | STRIPE | 100 | 16 | - | AA | A | A |
| EXAMPLE 3 | MESH | 50 | 13 | - | AA | A | A |
| EXAMPLE 4 | MESH | 80 | 20 | - | AA | A | A |
| EXAMPLE 5 | STRIPE | 150 | 13 | A | A | AA | AA |
| EXAMPLE 6 | STRIPE | 150 | 13 | A | A | AA | AA |
| EXAMPLE 7 | STRIPE | 150 | 13 | A | A | AA | AA |
| COMPARATIVE EXAMPLE 1 | NONE | - | - | - | C | C | C |
| Pm : AVERAGE PITCH<br>Ra : ARITHMETIC MEAN ROUGHNESS | | | | | | | |

The following can be seen from TABLEs 1 and 2.

When a plurality of nanostructure bodies are formed on the fingerprint resistant surface and these structure bodies contain the second compound, noticeability of fingerprint patterns can be reduced.

The plurality of nanostructure bodies formed on the fingerprint resistant surface can provide the AR function.

In Example 7, the addition of the acrylate oligomer including a fluorine atom and a siloxane moiety reduces surface frictional force as compared with that in Example 6. Surface irregularities are formed also in Example 6, and therefore the feeling of wiping when fingerprints adhering to the surface are wiped off with tissue paper (Elleair, registered trademark, manufactured by DAIO PAPER Co.) is good. This may be because the surface irregularities reduce frictional force on the tissue paper. The feeling of wiping was further improved in Example 7 in which the surface frictional force was smaller.

The embodiments and examples of the present technique have been specifically described above. However, the present technique is not limited to the above embodiments and examples, and various modifications can be made on the basis of the technical idea of the present technique.

For example, the configurations, methods, processes, shapes, materials, values, etc. described in the above embodiments and examples are merely illustrative, and configurations, methods, processes, shapes, materials, values, etc. different from those described above may be used as needed.

The configurations, methods, processes, shapes, materials, values, etc. in the above embodiments and examples may be mutually combined so long as the combination does not depart from the gist of the present technique.

In addition, the present technique may be configured as follows.

(1) An anti-smudge body having
a surface and a fine irregular structure provided to the surface, wherein
the irregular structure contains at least one of a first compound having an ester linkage in a portion other than terminal ends and a second compound having a cyclic hydrocarbon group.

(2) The anti-smudge body according to (1), wherein the irregular structure has a fluctuation.

(3) The anti-smudge body according to any of (1) and (2), wherein the irregular structure is configured by a random nanostructure.

(4) The anti-smudge body according to any of (1) to (3), wherein the irregular structure includes a structure body of a stripe shape, a mesh shape or a needle shape.

(5) The anti-smudge body according to any of (1) to (4), wherein the surface has an arithmetic mean roughness in a range of 5 nm or larger and 100 nm or smaller.

(6) The anti-smudge body according to any of (1) to (5), including
a substrate having a surface, and
an anti-smudge layer provided on the surface of the substrate, wherein
the anti-smudge layer has the surface on which the irregular structure is provided.

(7) The anti-smudge body according to (6), wherein
the anti-smudge layer contains at least one resin composition of an energy ray-curable resin composition and a thermosetting resin composition, and
the resin composition contains the at least one of the first compound and the second compound.

(8) The anti-smudge body according to any of (1) to (7), wherein the first compound and the second compound are each an additive.

(9) The anti-smudge body according to (8), wherein the additive is a leveling agent.

(10) The anti-smudge body according to (6), wherein a plurality of structure bodies are provided on the surface of the substrate, and
the anti-smudge layer is provided so as to conform to the surface of the plurality of structure bodies of the substrate.

(11) The anti-smudge body according to (10), wherein the at least one of the first compound and the second compound is adsorbed onto the surface of the plurality of structure bodies of the substrate.

(12) The anti-smudge body according to (11), wherein the anti-smudge layer is a monomolecular layer containing the at least one of the first compound and the second compound.

(13) The anti-smudge body according to any of (1) to (5), wherein
the structure bodies contain a thermoplastic resin composition, and
the thermoplastic resin composition contains the at least one of the first compound and the second compound.

(14) The anti-smudge body according to any of (1) to (5), wherein
the first compound is represented by the formula (1) or (2) below, and
the second compound is represented by the formula (3) or (4) below,

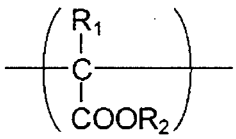

· · · (1)

(in the formula (1), $R_1$ is a group containing C, N, S, O, Si, P, or Ti, and $R_2$ is a group having 2 or more carbon atoms)

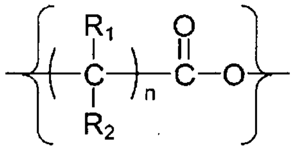

· · · (2)

(in the formula (2), $R_1$ and $R_2$ are each independently a group containing C, N, S, O, Si, P, or Ti)

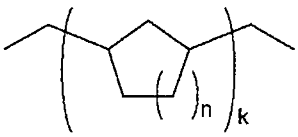

· · · (3)

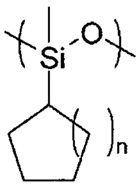

· · · (4)

(15) The anti-smudge body according to any of (1) to (5), wherein the anti-smudge layer further contains, together with the second compound, a third compound having a chain hydrocarbon group at a terminal end.

(16) The anti-smudge body according to (15), wherein the third compound is represented by the formula (5) or (6) below

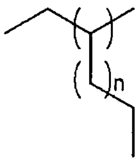

· · · (5)

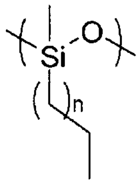

· · · (6)

(17) The anti-smudge body according to any of (1) to (16), wherein a recessed portion in the irregular structure causes positive capillary pressure to act on a liquid present on the surface.

(18) An input device having
an input surface and an anti-smudge body provided thereto, wherein
the anti-smudge body is the anti-smudge body as set forth in any of (1) to (17).

(19) A display device having
a display surface and an anti-smudge body provided thereto, wherein
the anti-smudge body is the anti-smudge body as set forth in any of (1) to (17).

(20) An electronic device including the anti-smudge body as set forth in any of (1) to (17).

(21) An anti-smudge article including the anti-smudge body as set forth in any of (1) to (17).

Reference Signs List

| | |
|---|---|
| 11, 21 | substrate |
| 12, 25 | anti-smudge layer |
| 12a, 22 | structure body |
| 12b, 24b | base layer |
| 13 | anchor layer |
| 14 | hard coating layer |
| 15 | transparent conductive layer |
| 23 | anti-smudge structure layer |
| 23a | surface structure body (first structure body) |
| 24 | fine structure layer |
| 24a | inner structure body (second structure body) |
| 25a | adsorption compound |
| 31 | plate-shaped master |
| 32, 52 | structure body |
| 51 | master roll |
| 101, 113, 125, 133, 143 | display device |
| 102 | input device |
| 103 | front panel |
| 111 | television set |
| 112, 123, 124, 132, 142 | casing |
| 121 | notebook-type personal computer |
| 131 | cellular phone |
| 141 | tablet-type computer |
| S | fingerprint resistant surface (anti-smudge surface) |
| $S_1$ | display surface |
| $S_2$ | input surface |

## Claims

1. An anti-smudge body comprising:

   a surface and a fine irregular structure provided to the surface, wherein
   the irregular structure contains at least one of a first compound having an ester linkage in a portion other than terminal ends and a second compound having a cyclic hydrocarbon group.

2. The anti-smudge body according to claim 1, wherein the irregular structure has a fluctuation.

3. The anti-smudge body according to claim 1 or 2, wherein the irregular structure is a random nanostructure.

4. The anti-smudge body according to any of claims 1 to 3, wherein the irregular structure includes a structure body of a stripe shape, a mesh shape or a needle shape.

5. The anti-smudge body according to any of claims 1 to 4, wherein the surface has an arithmetic mean roughness in a range of 5 nm or larger and 100 nm or smaller.

6. The anti-smudge body according to claim 1, comprising
   a substrate having a surface, and
   an anti-smudge layer provided on the surface of the substrate, wherein
   the anti-smudge layer has the surface on which the irregular structure is provided.

7. The anti-smudge body according to claim 6, wherein
   the anti-smudge layer contains at least one resin composition of an energy ray-curable resin composition and a thermosetting resin composition, and

the resin composition contains the at least one of the first compound and the second compound.

**8.** The anti-smudge body according to any of claims 1 to 7, wherein the first compound and the second compound are each an additive.

**9.** The anti-smudge body according to claim 8, wherein the additive is a leveling agent.

**10.** The anti-smudge body according to claim 6, wherein a plurality of structure bodies are provided on the surface of the substrate, and
the anti-smudge layer is provided so as to conform to the surface of the plurality of structure bodies of the substrate.

**11.** The anti-smudge body according to claim 10, wherein the at least one of the first compound and the second compound is adsorbed onto the surface of the plurality of structure bodies of the substrate.

**12.** The anti-smudge body according to claim 11, wherein the anti-smudge layer is a monomolecular layer containing the at least one of the first compound and the second compound.

**13.** The anti-smudge body according to any of claims 1 to 5, wherein
the structure bodies contain a thermoplastic resin composition, and
the thermoplastic resin composition contains the at least one of the first compound and the second compound.

**14.** The anti-smudge body according to any of claims 1 to 5, wherein
the first compound is represented by the formula (1) or (2) below, and
the second compound is represented by the formula (3) or (4) below,

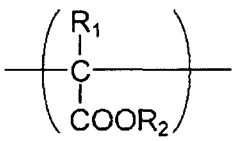

· · · (1)

(in the formula (1), $R_1$ is a group containing C, N, S, O, Si, P, or Ti, and $R_2$ is a group having 2 or more carbon atoms)

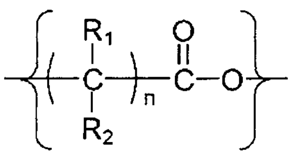

· · · (2)

(in the formula (2), $R_1$ and $R_2$ are each independently a group containing C, N, S, O, Si, P, or Ti)

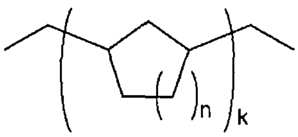

· · · (3)

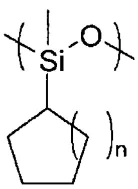

· · · (4)

**15.** The anti-smudge body according to any of claims 1 to 5, wherein the anti-smudge layer further contains, together

with the second compound, a third compound having a chain hydrocarbon group at a terminal end.

**16.** The anti-smudge body according to claim 15, wherein the third compound is represented by the formula (5) or (6) below

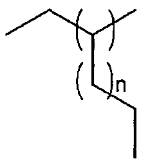

· · · (5)

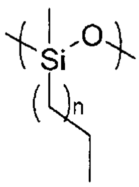

· · · (6)

**17.** The anti-smudge body according to any of claims 1 to 16, wherein a recessed portion in the irregular structure causes positive capillary pressure to act on a liquid present on the surface.

**18.** An input device comprising
an input surface and a fine irregular structure provided to the input surface, wherein
the irregular structure contains at least one of a first compound having an ester linkage in a portion other than terminal ends and a second compound having a cyclic hydrocarbon group.

**19.** A display device comprising
a display surface and a fine irregular structure provided to the display surface, wherein
the irregular structure contains at least one of a first compound having an ester linkage in a portion other than terminal ends and a second compound having a cyclic hydrocarbon group.

**20.** An electronic device comprising
a surface and a fine irregular structure provided to the surface, wherein
the irregular structure contains at least one of a first compound having an ester linkage in a portion other than terminal ends and a second compound having a cyclic hydrocarbon group.

**21.** An anti-smudge article comprising
a surface and a fine irregular structure provided to the surface, wherein
the irregular structure contains at least one of a first compound having an ester linkage in a portion other than terminal ends and a second compound having a cyclic hydrocarbon group.

FIG. 1

A

B

C

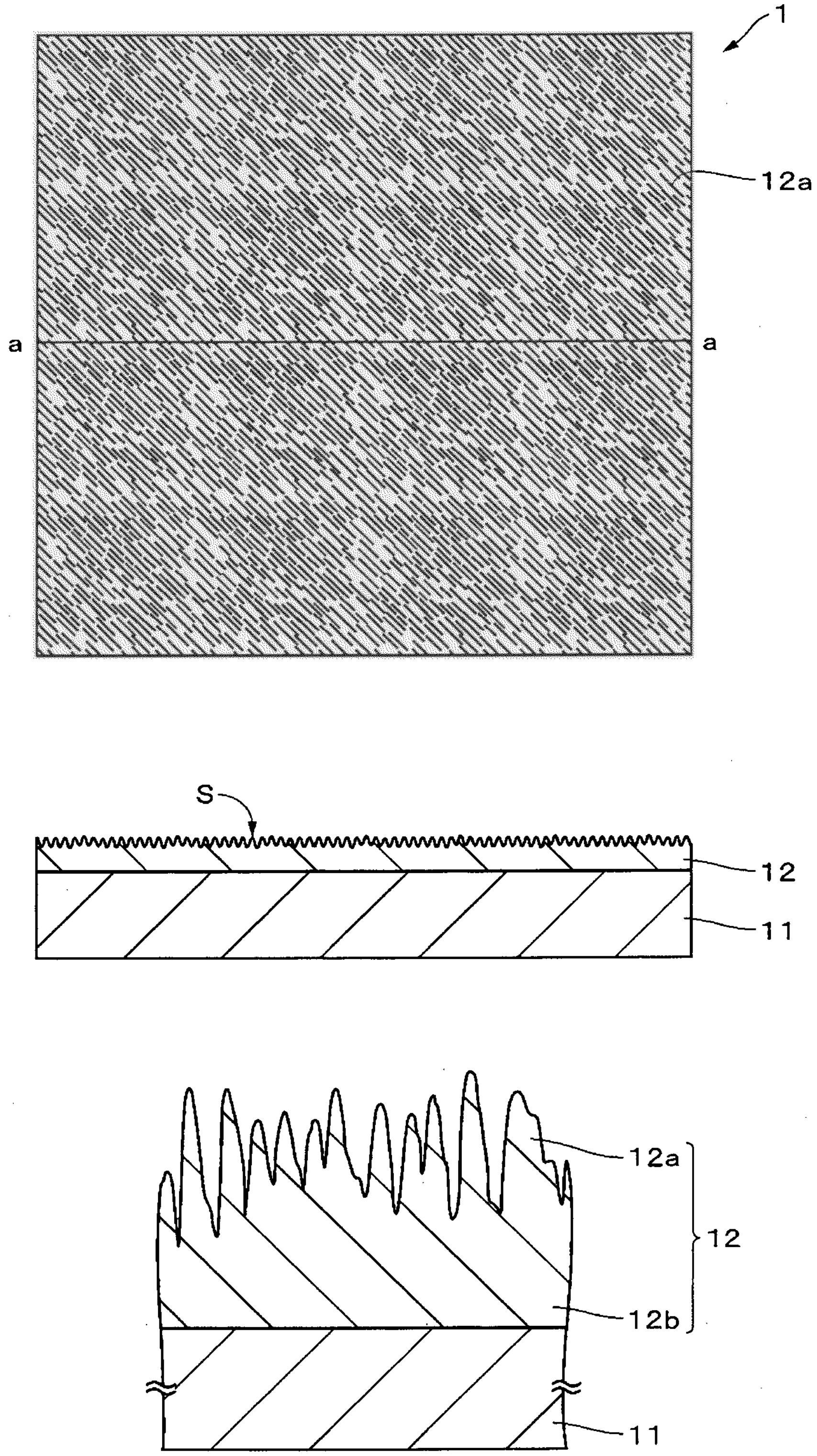

FIG. 2

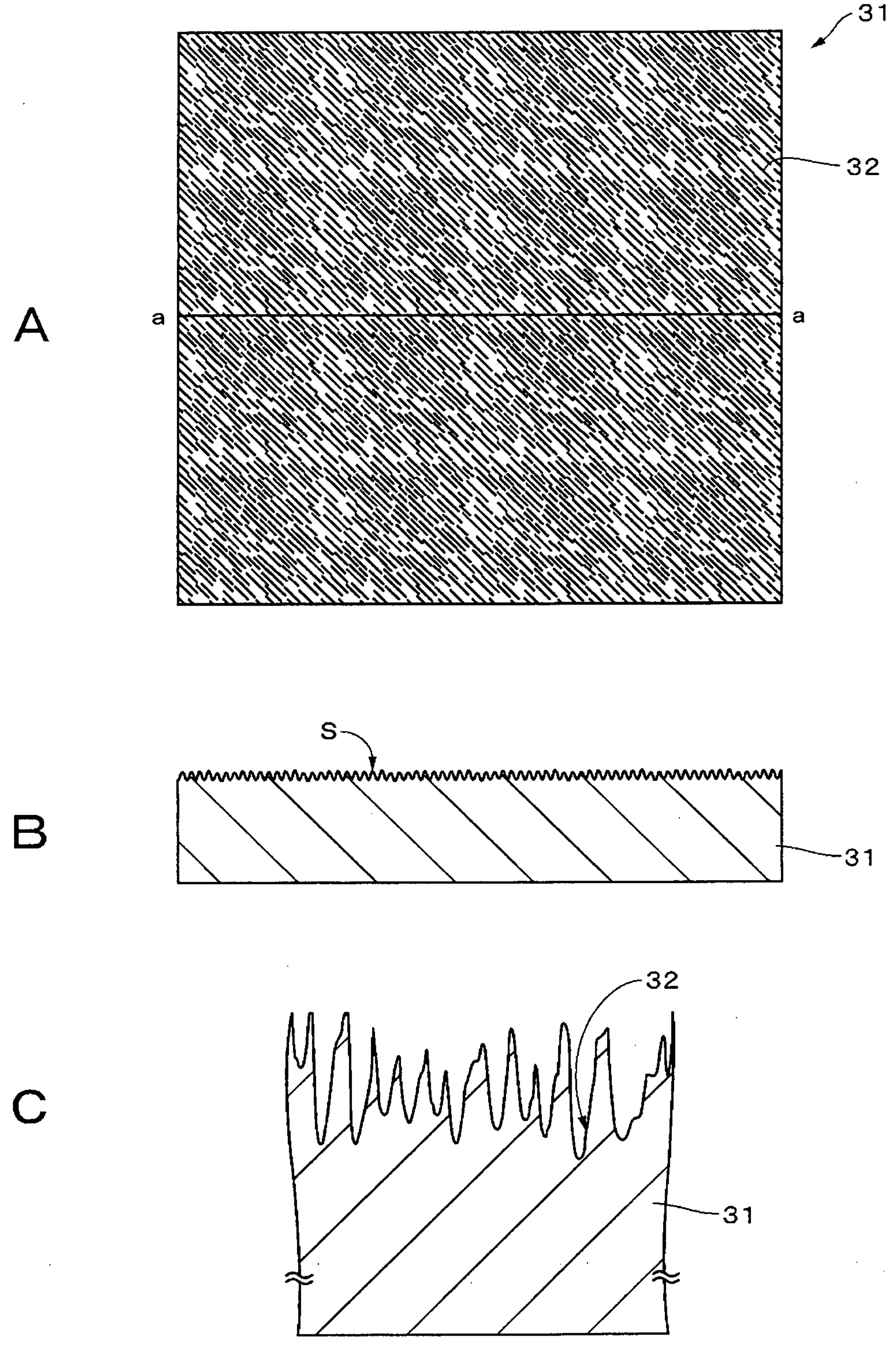

FIG. 3

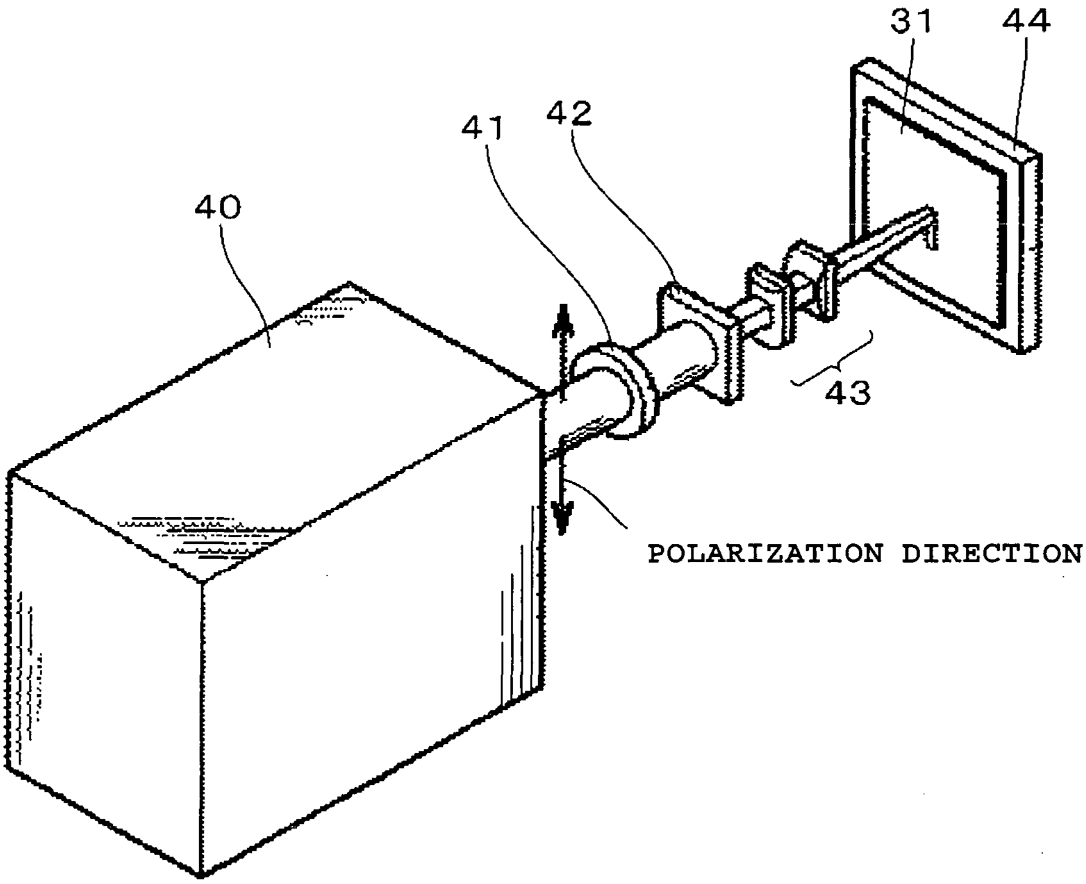

FIG. 4

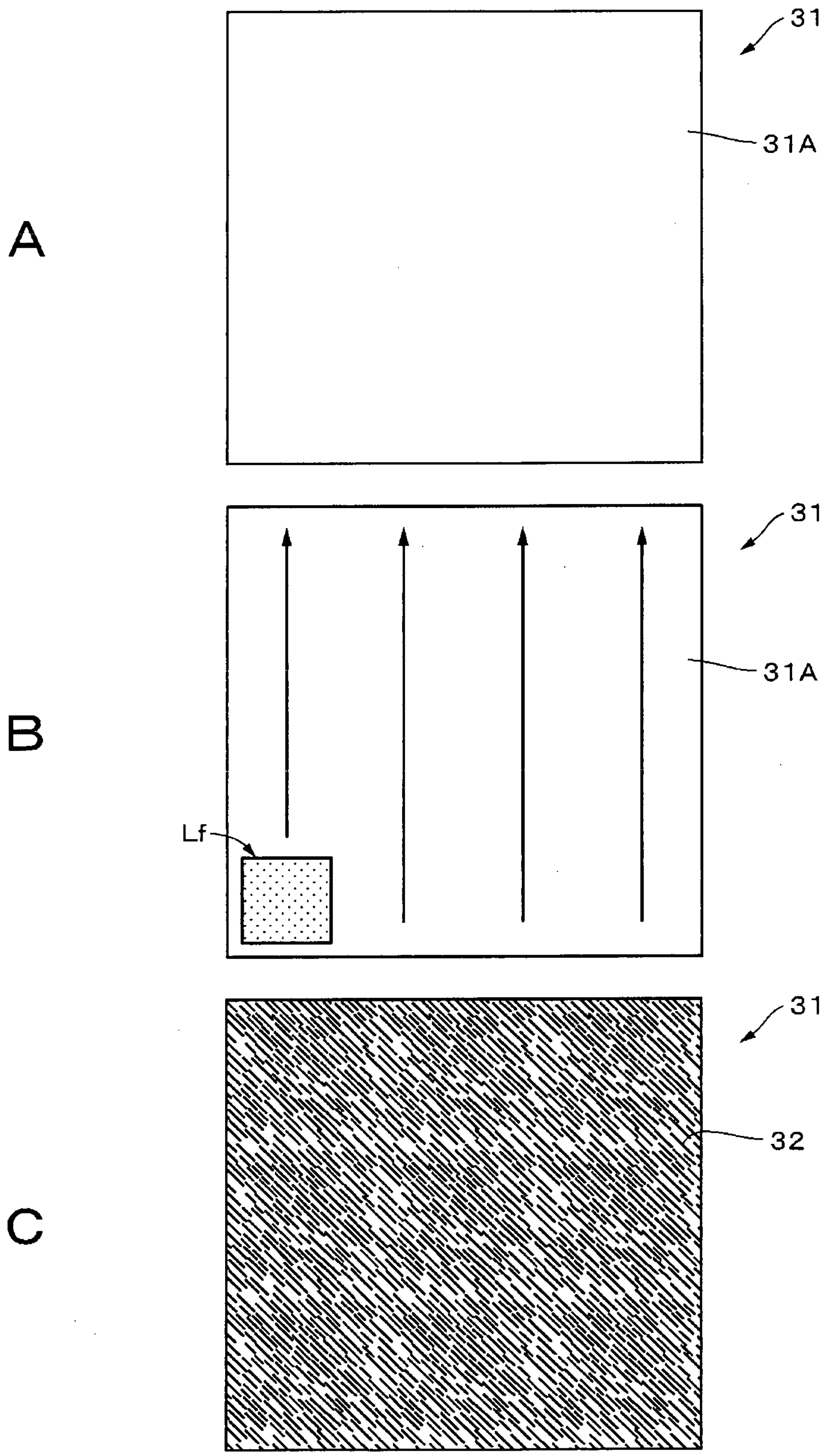

FIG. 5

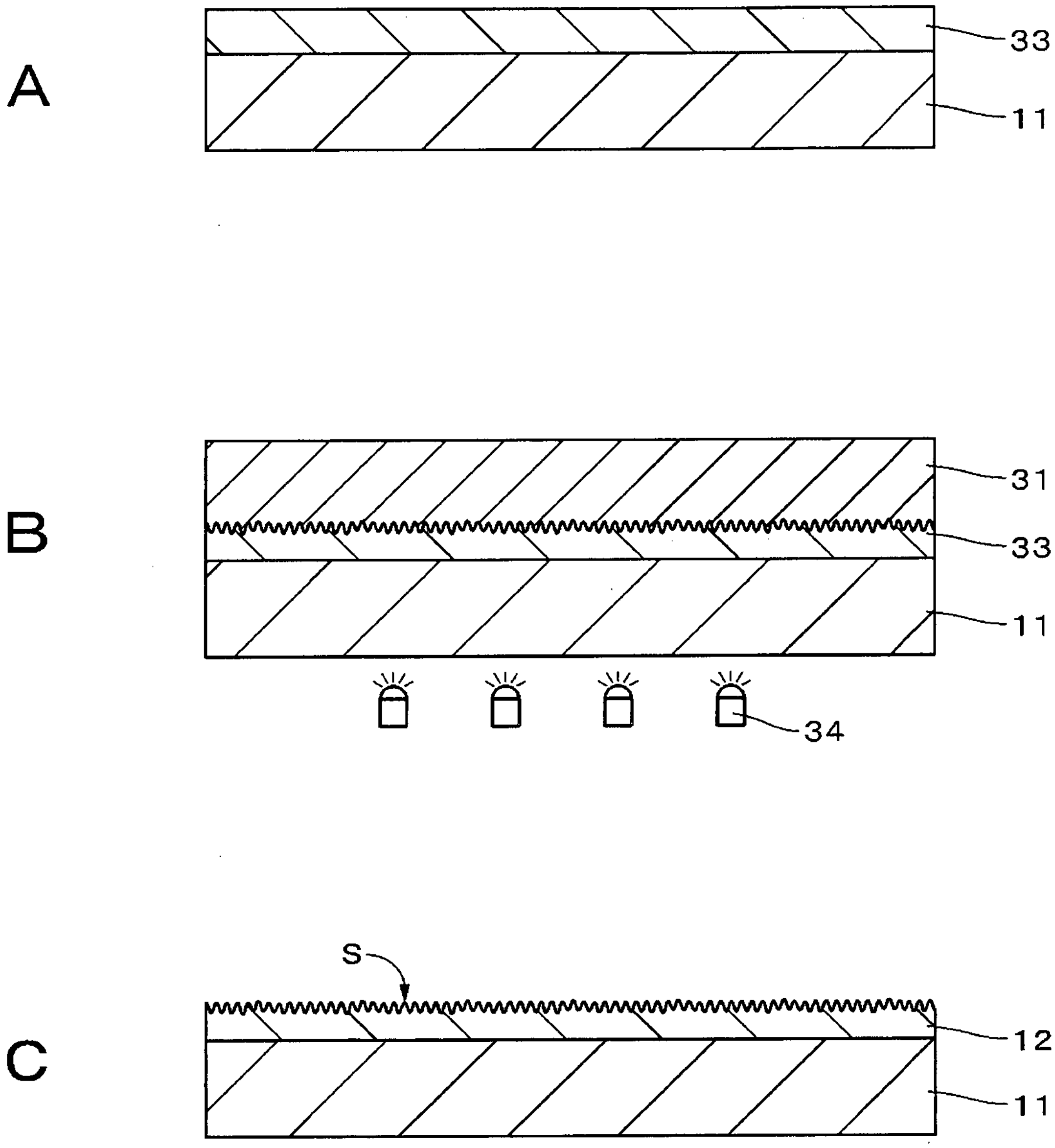

FIG. 6

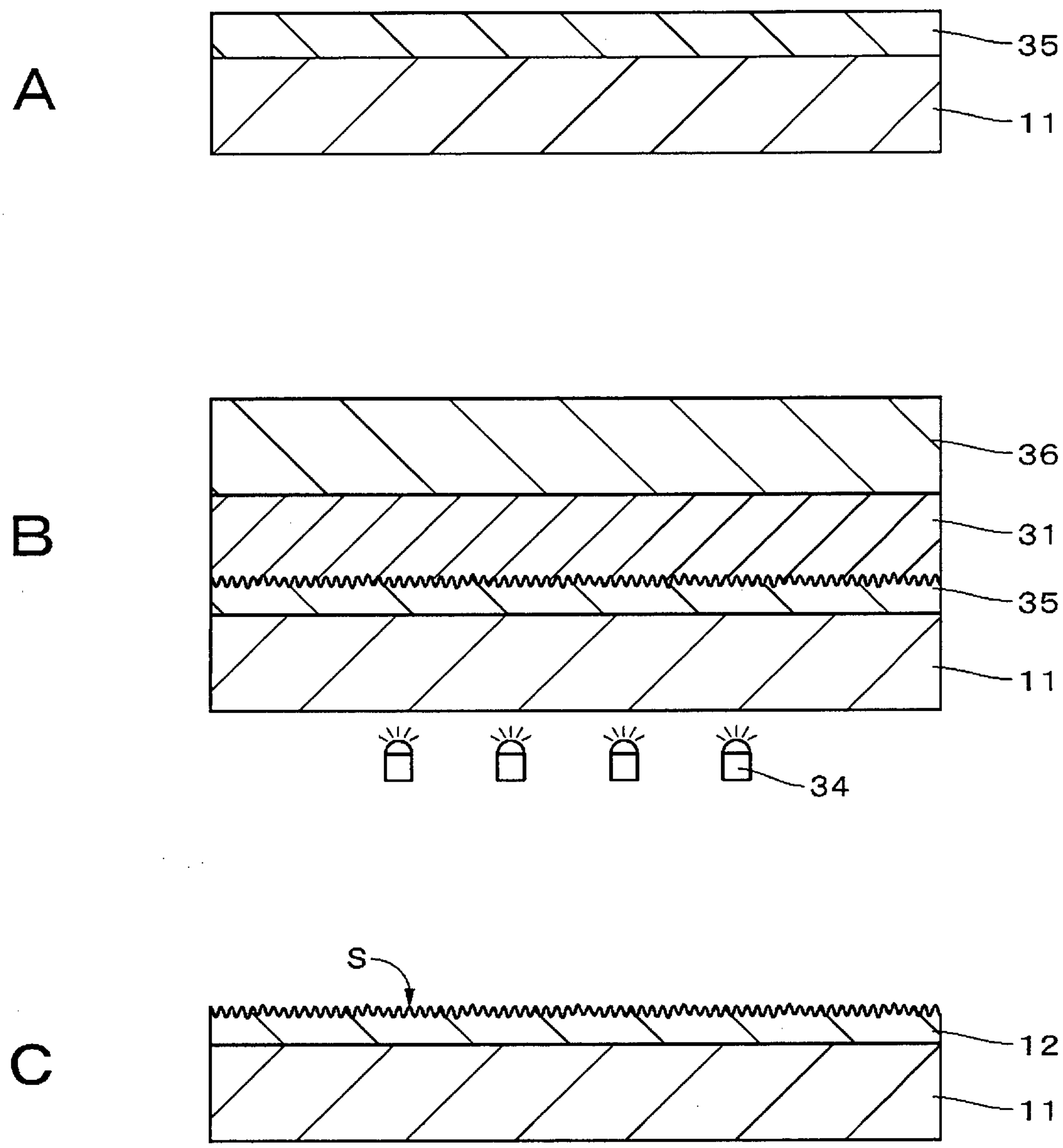

FIG. 7

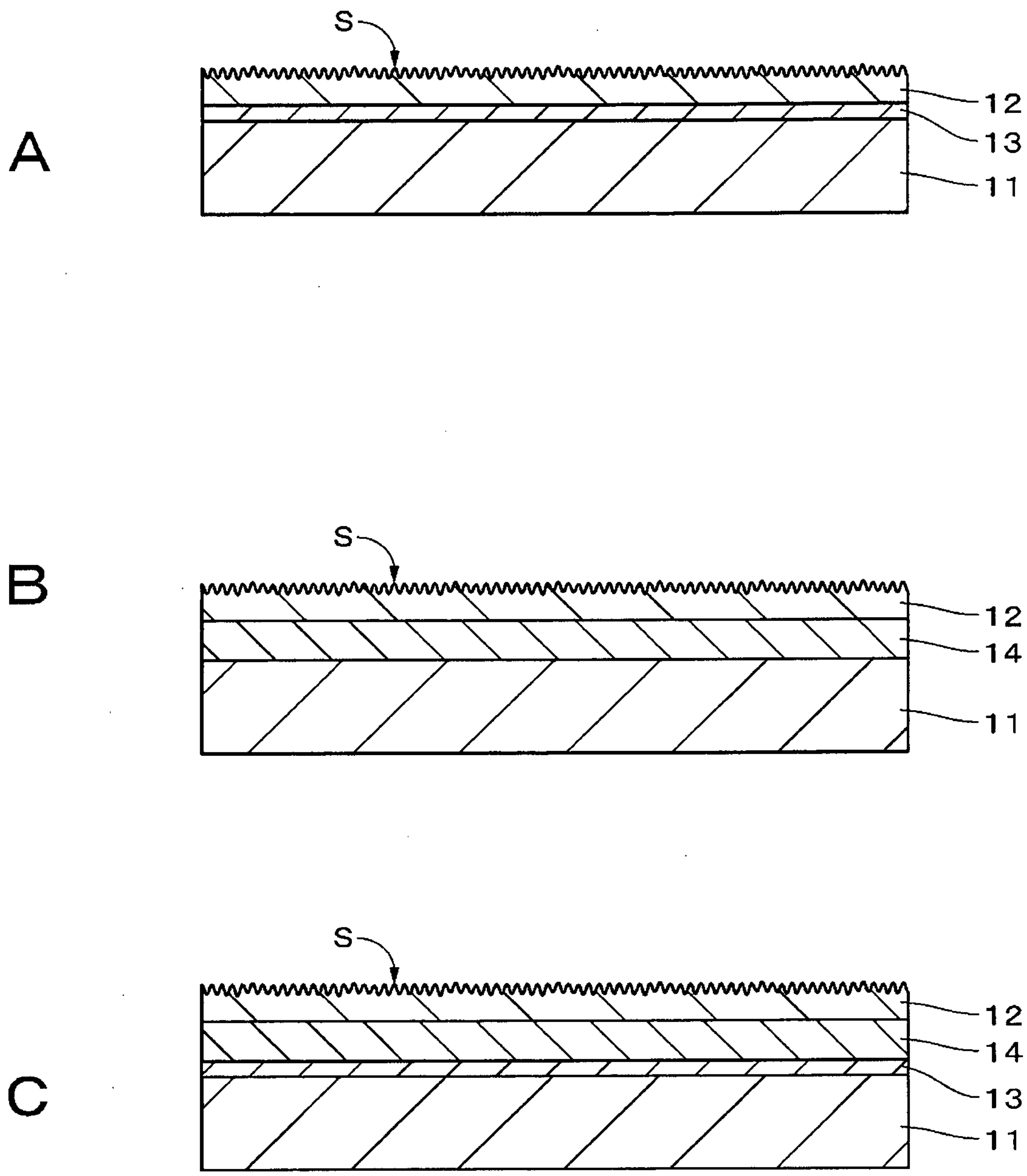

FIG. 8

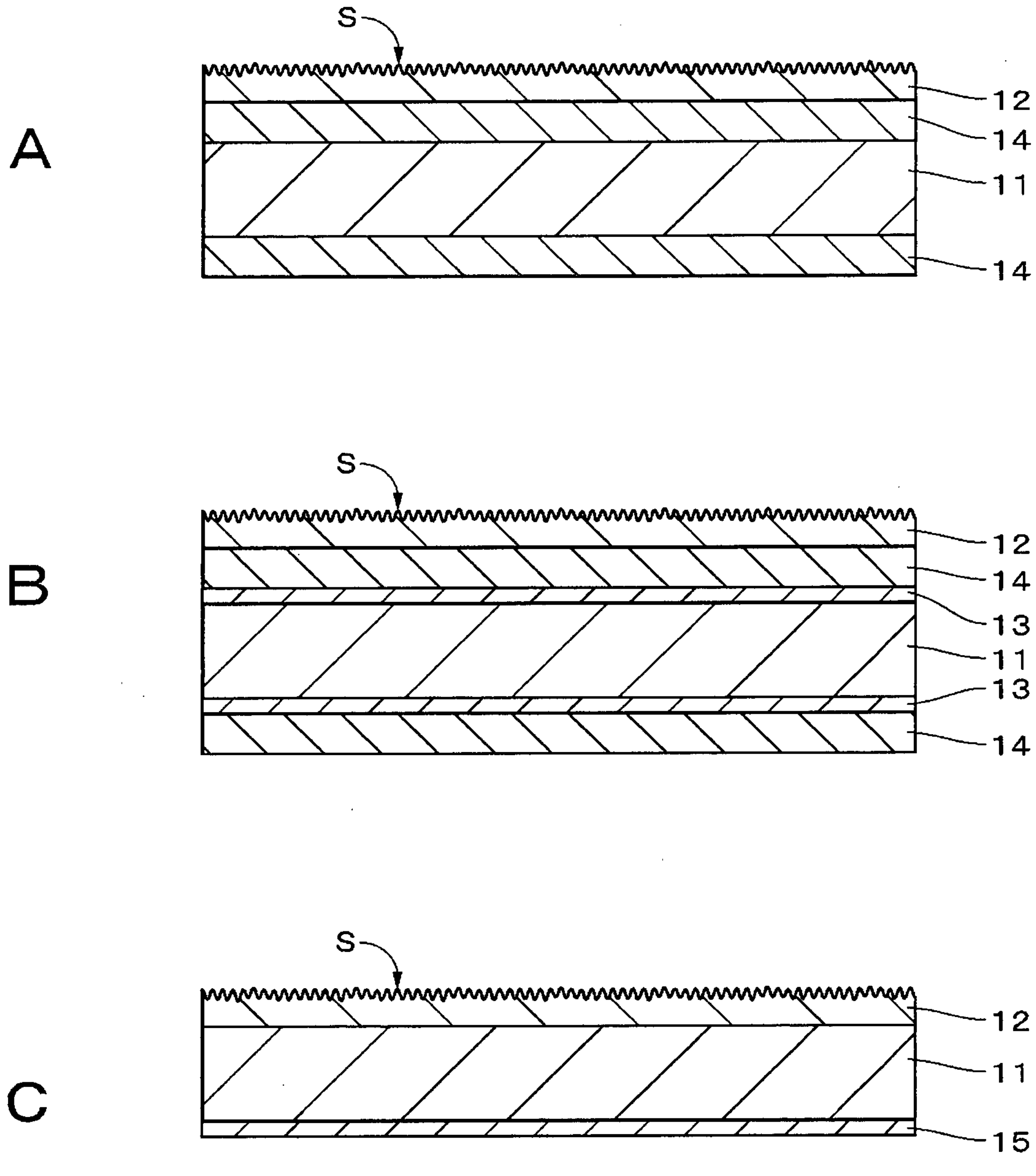

FIG. 9

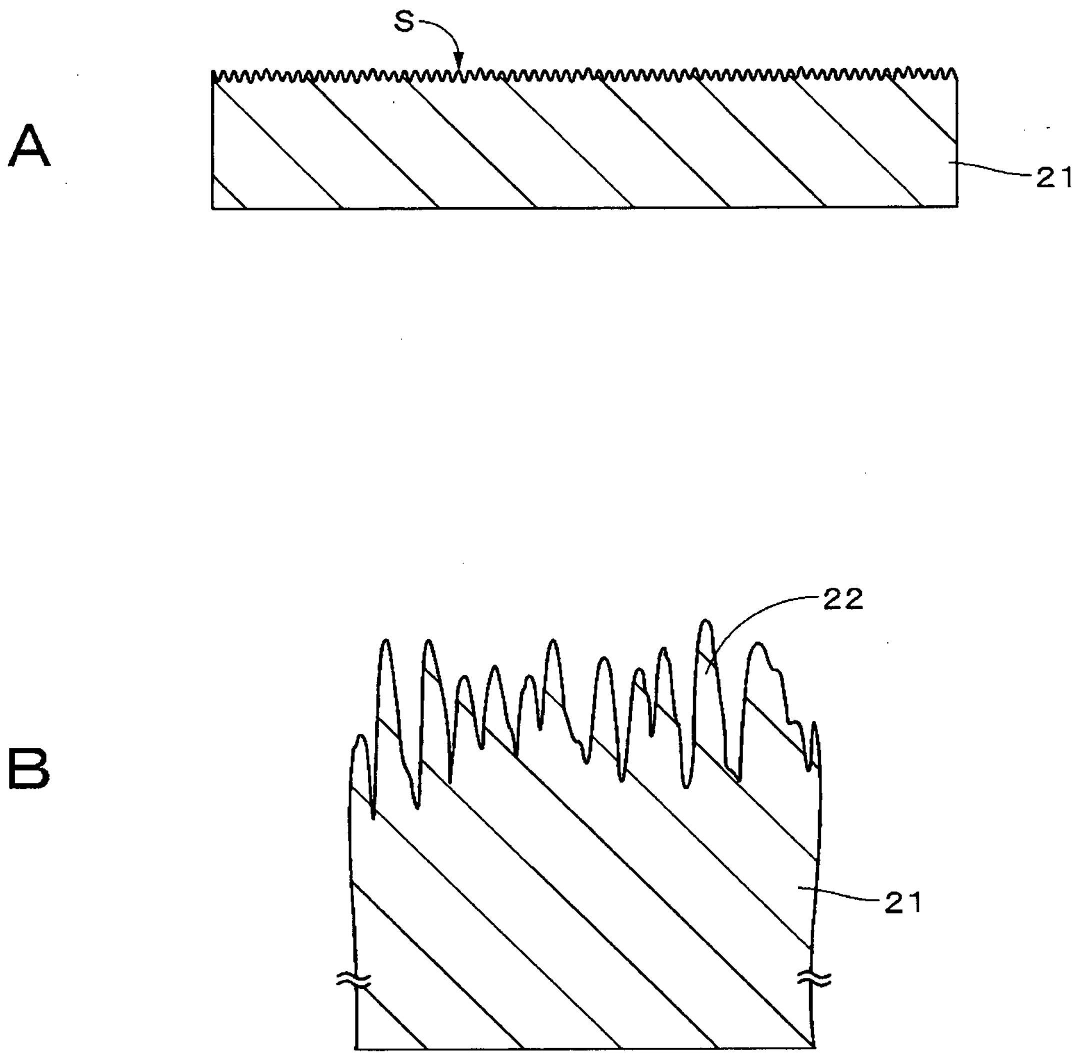

FIG. 10

A

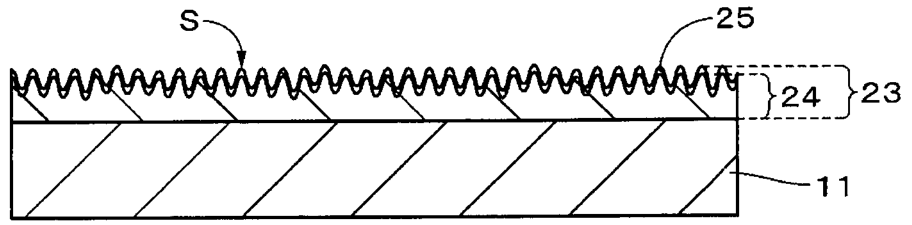


B

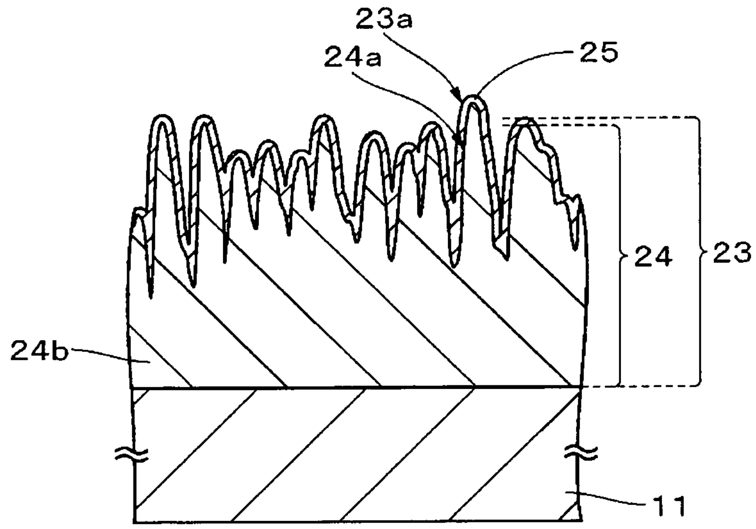

FIG. 11

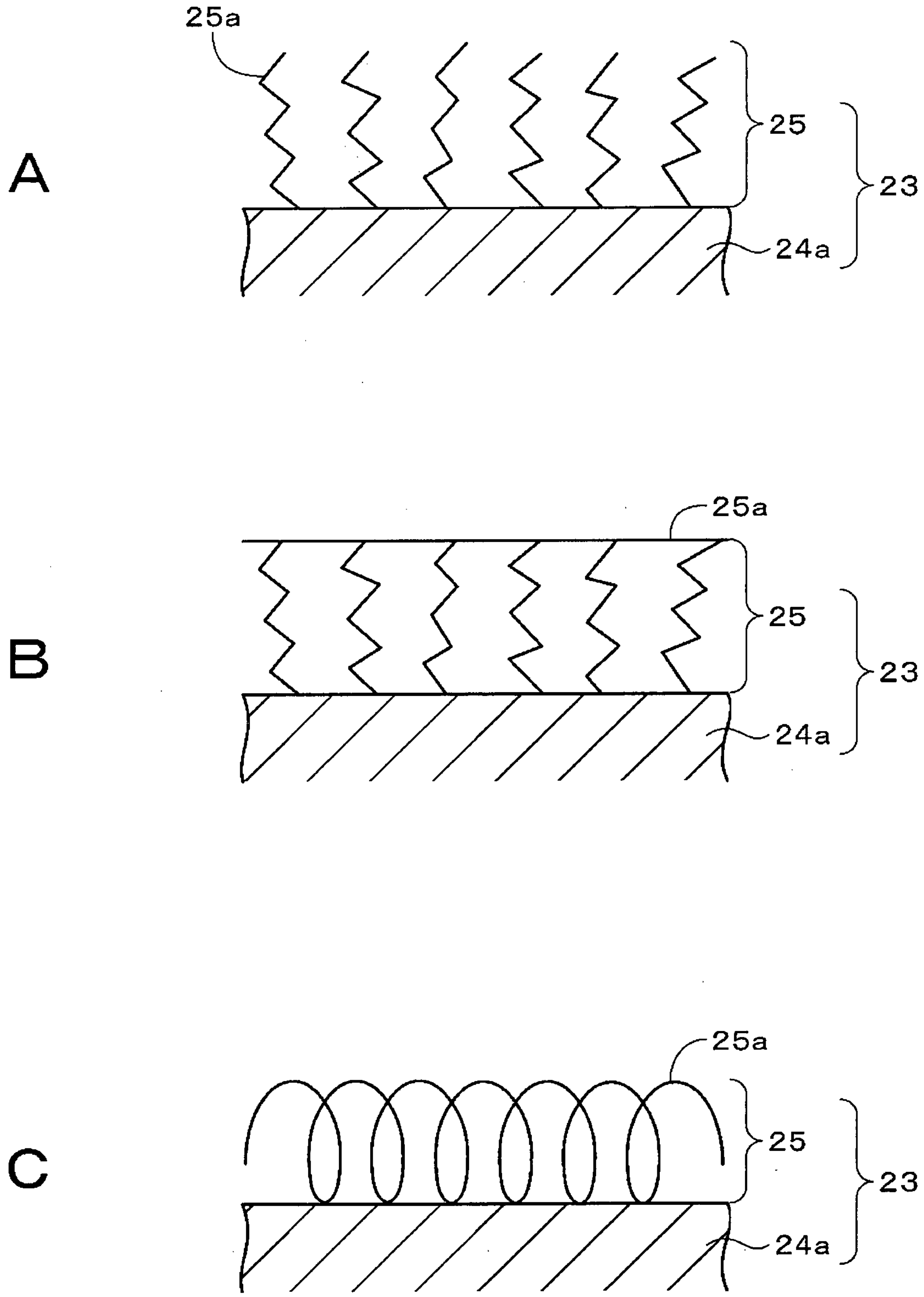

FIG. 12

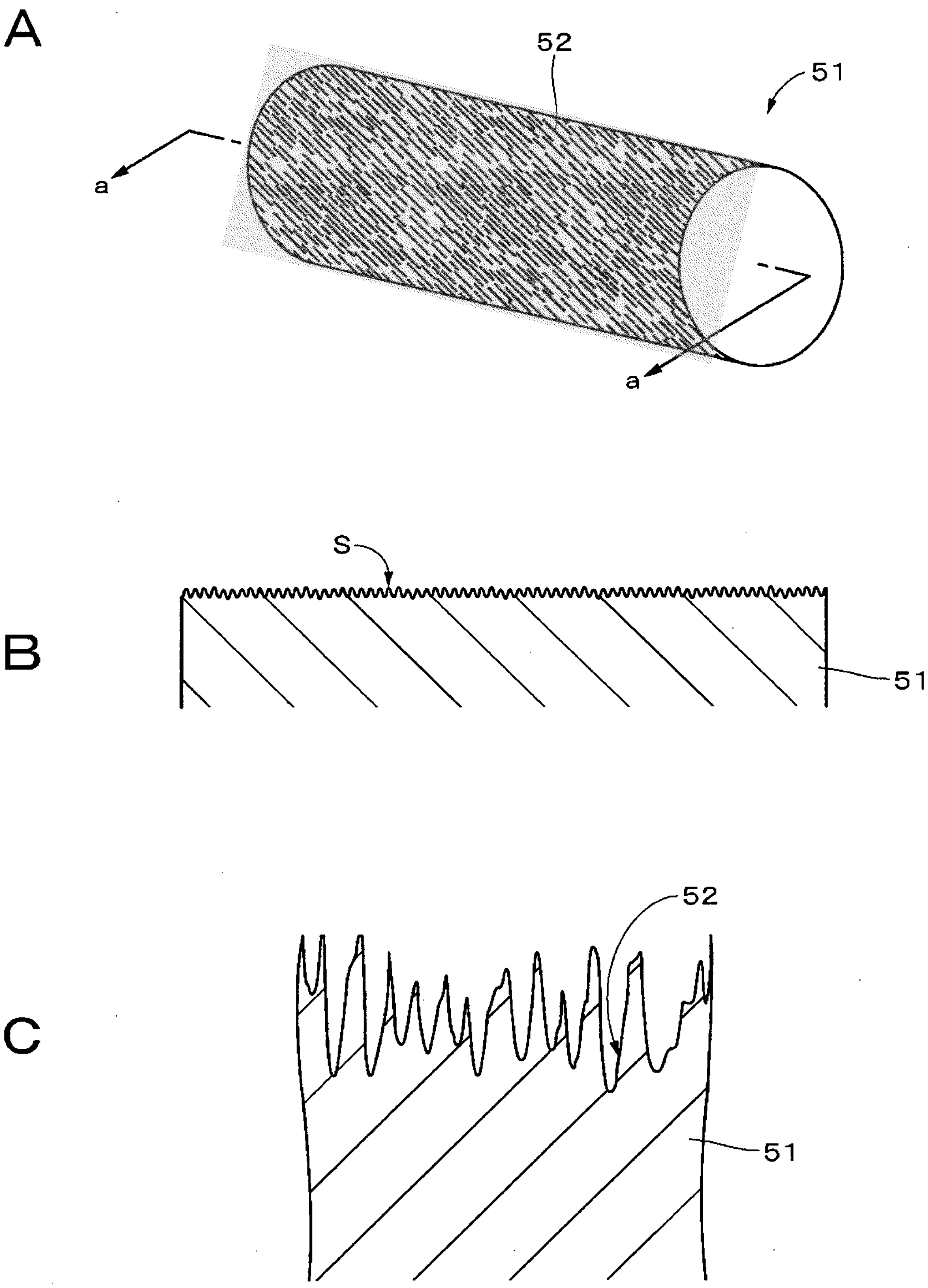

FIG. 13

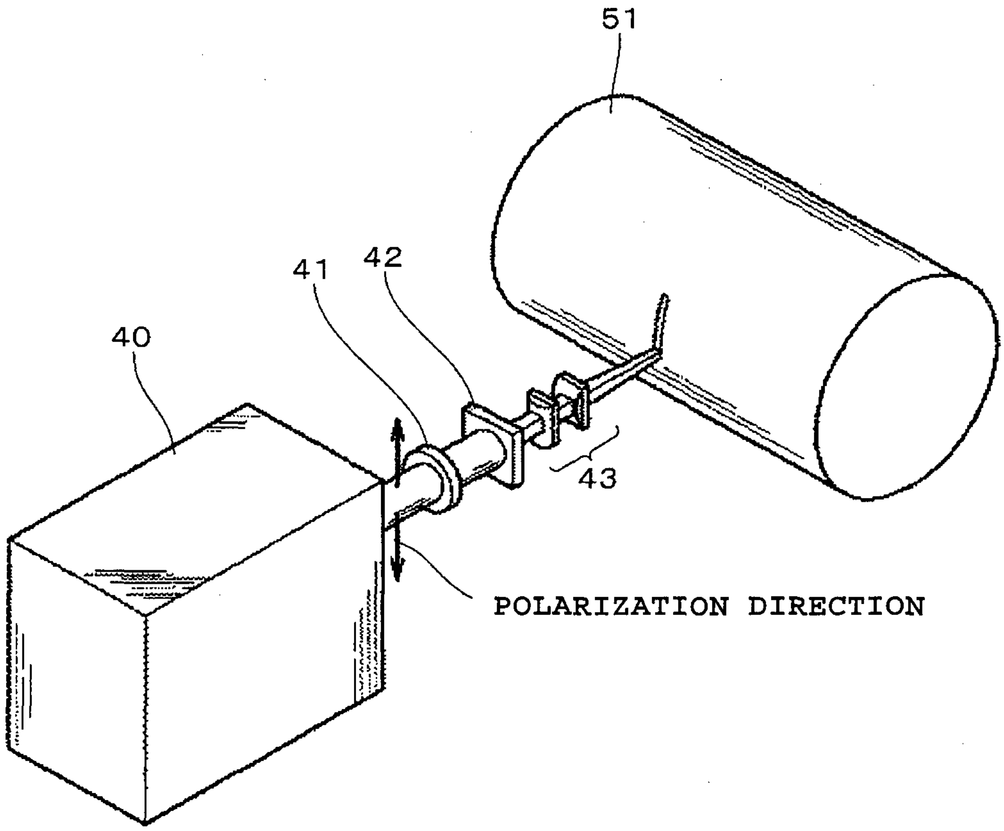

FIG. 14

A

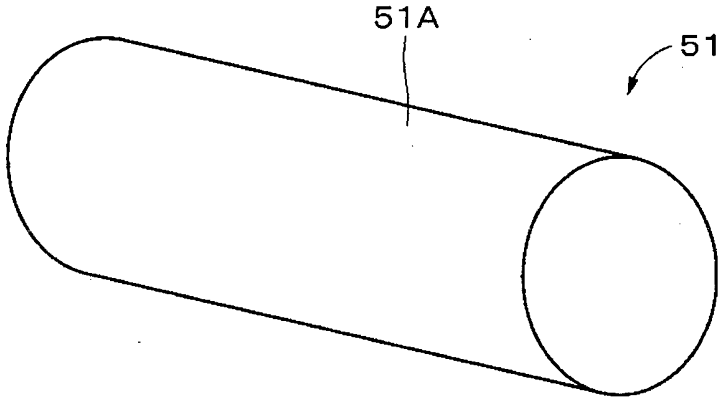


B

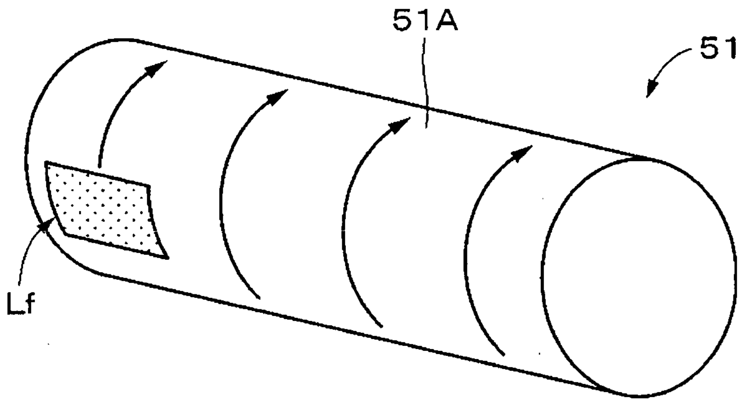


C

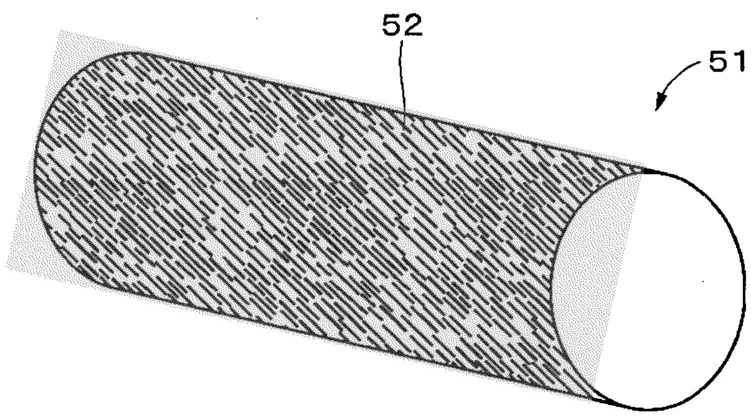

FIG. 15

A

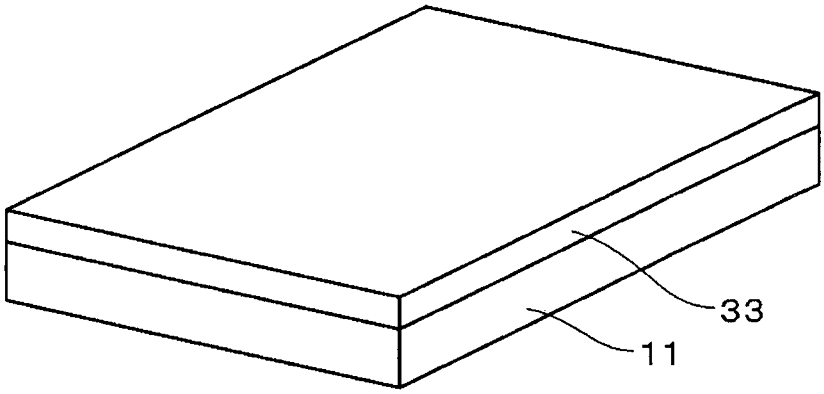


B

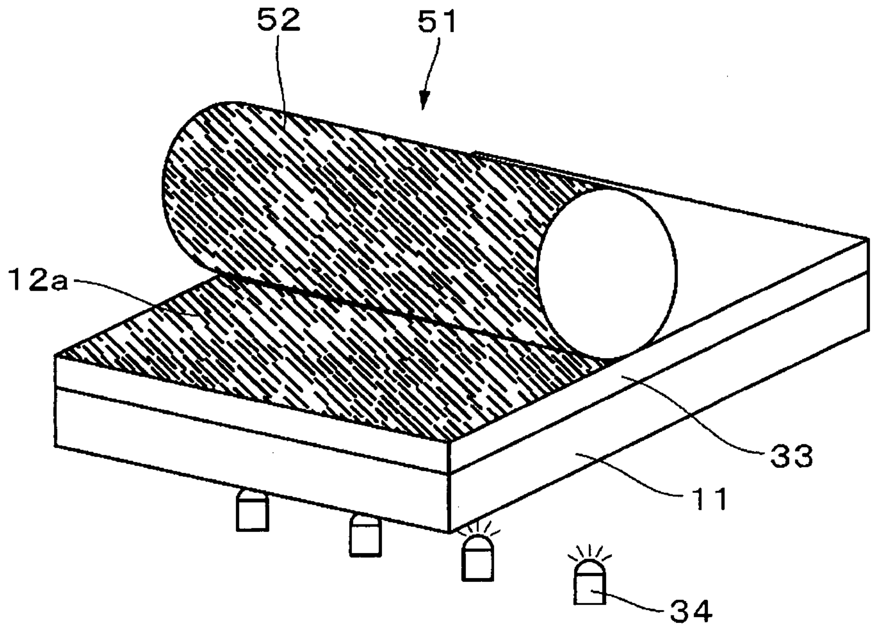

FIG. 16

A

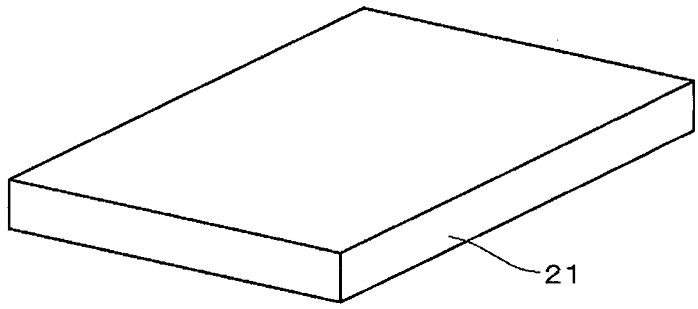


B

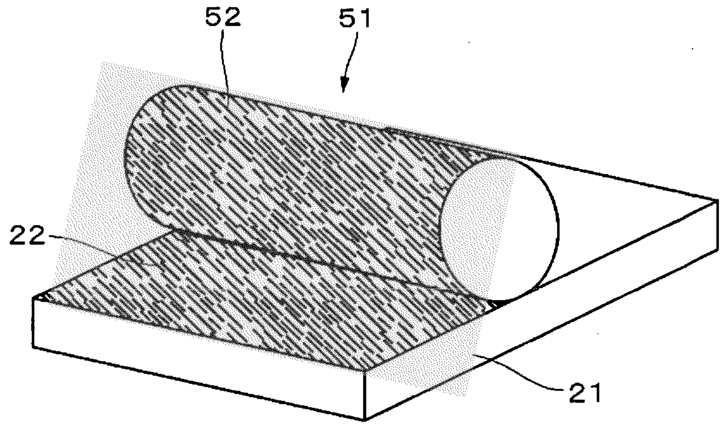


FIG. 17

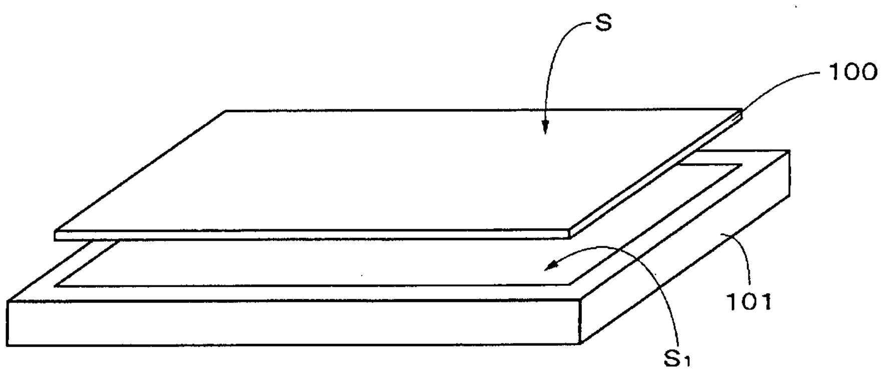

FIG. 18

A

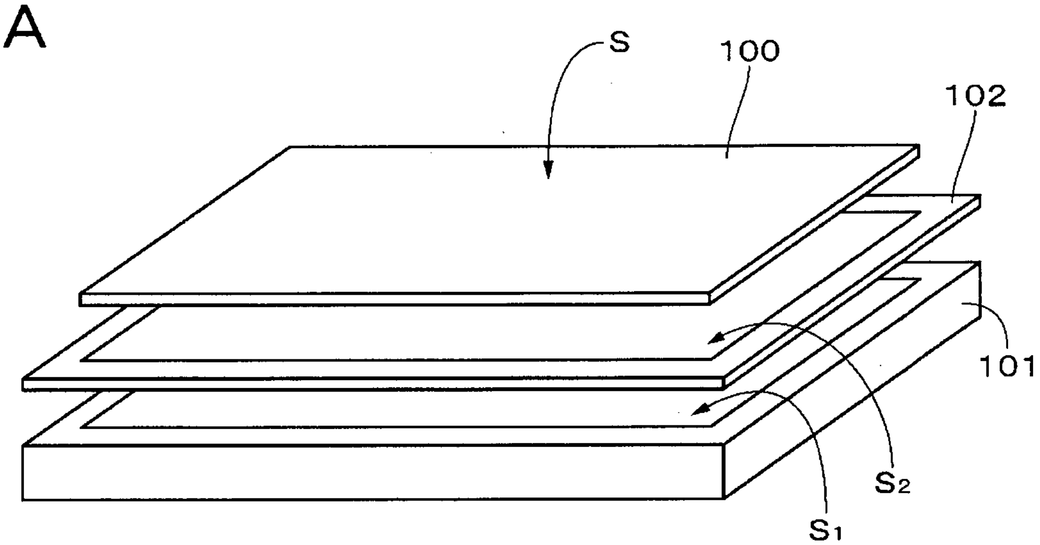


B

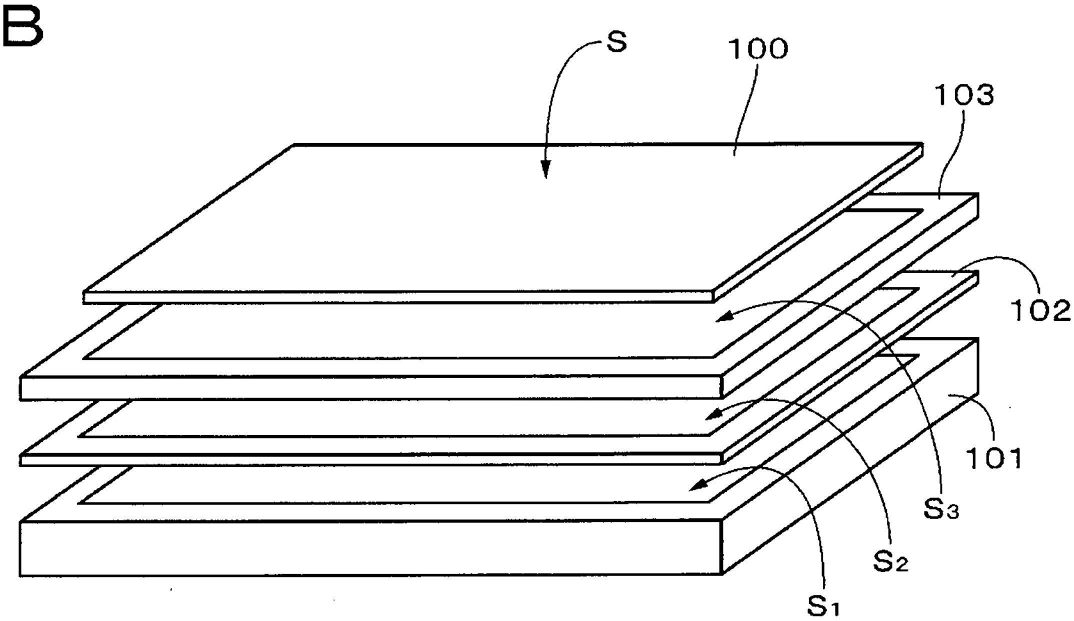

FIG. 19

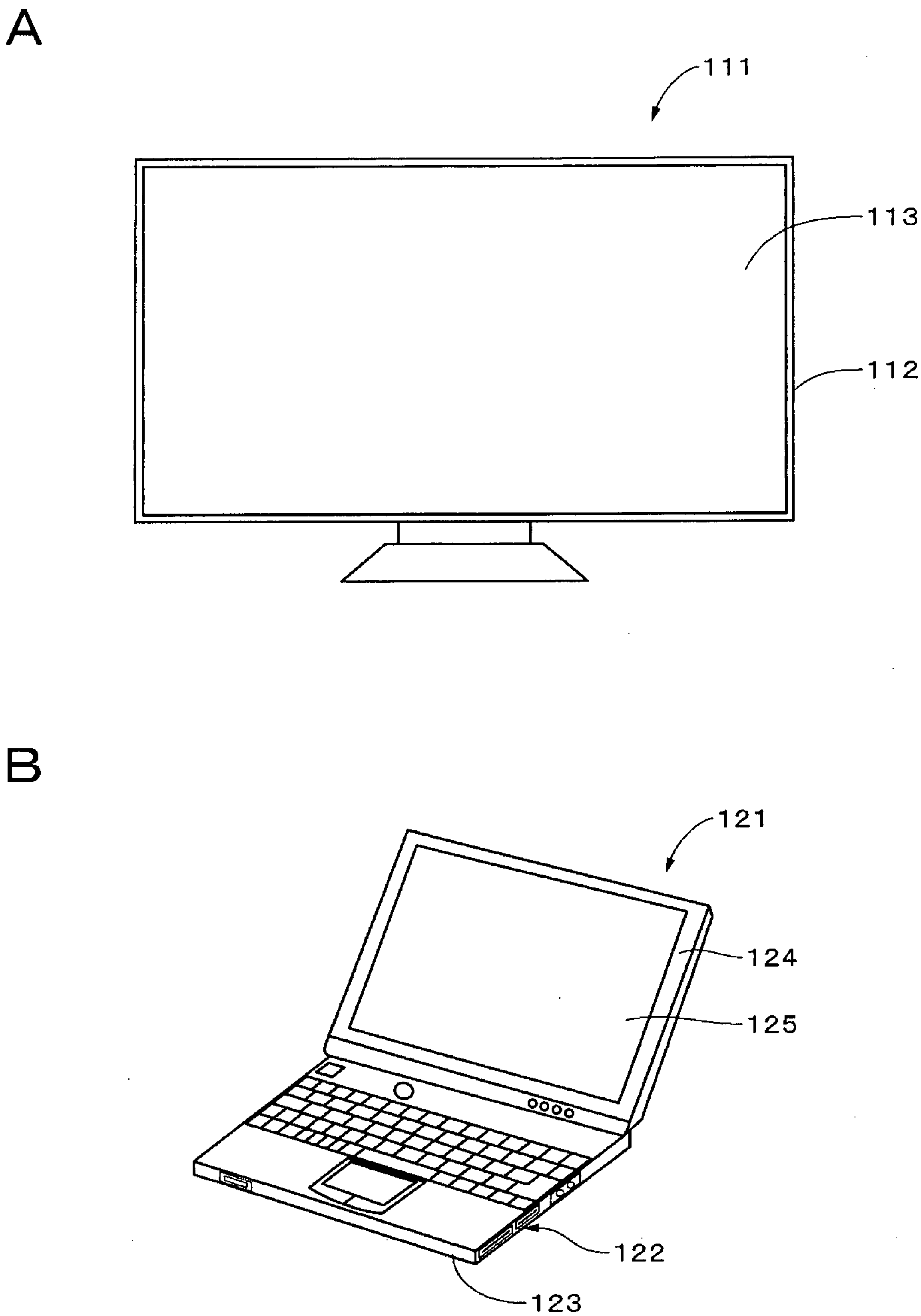

FIG. 20

A

B

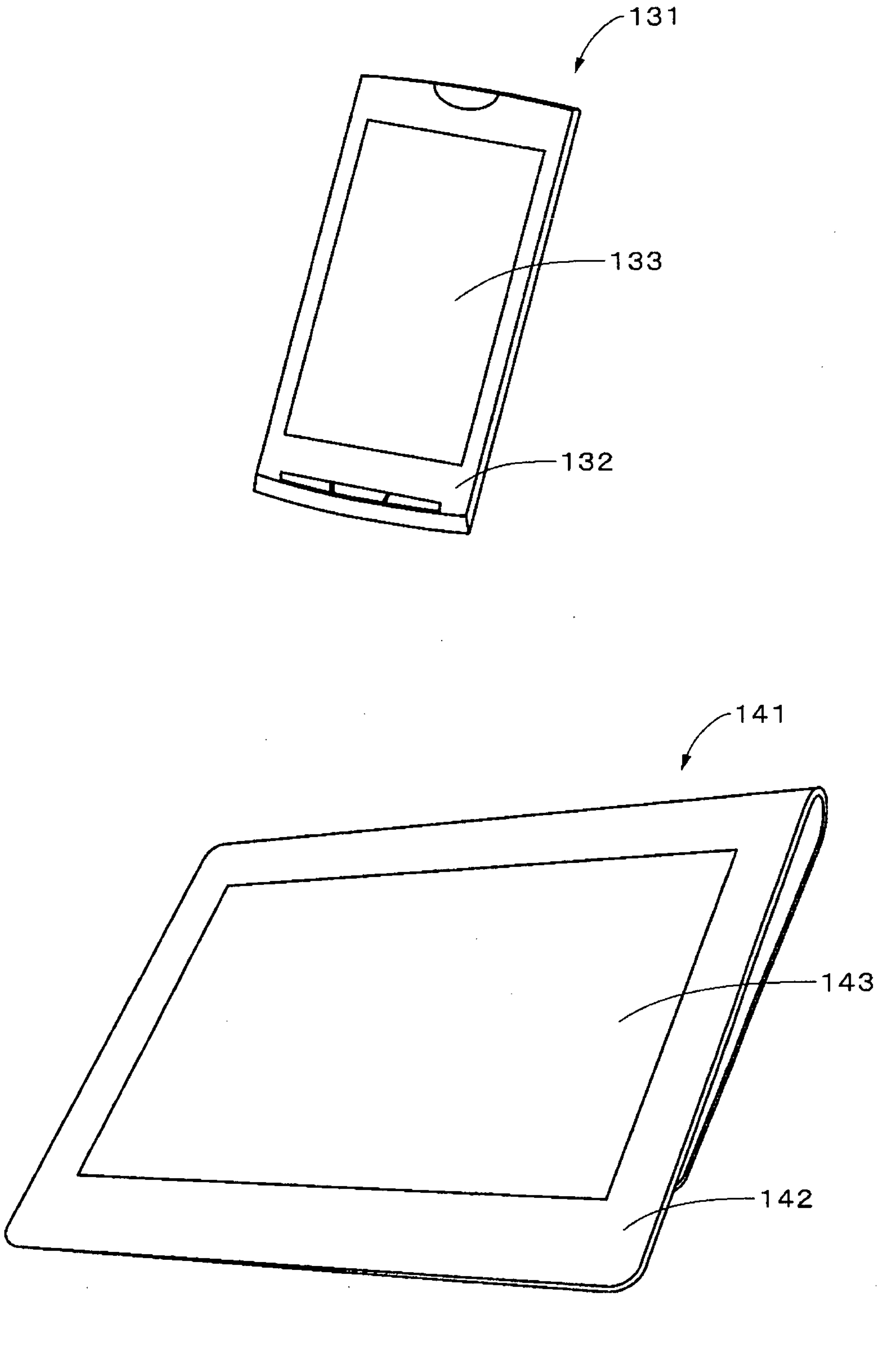

FIG. 21

A

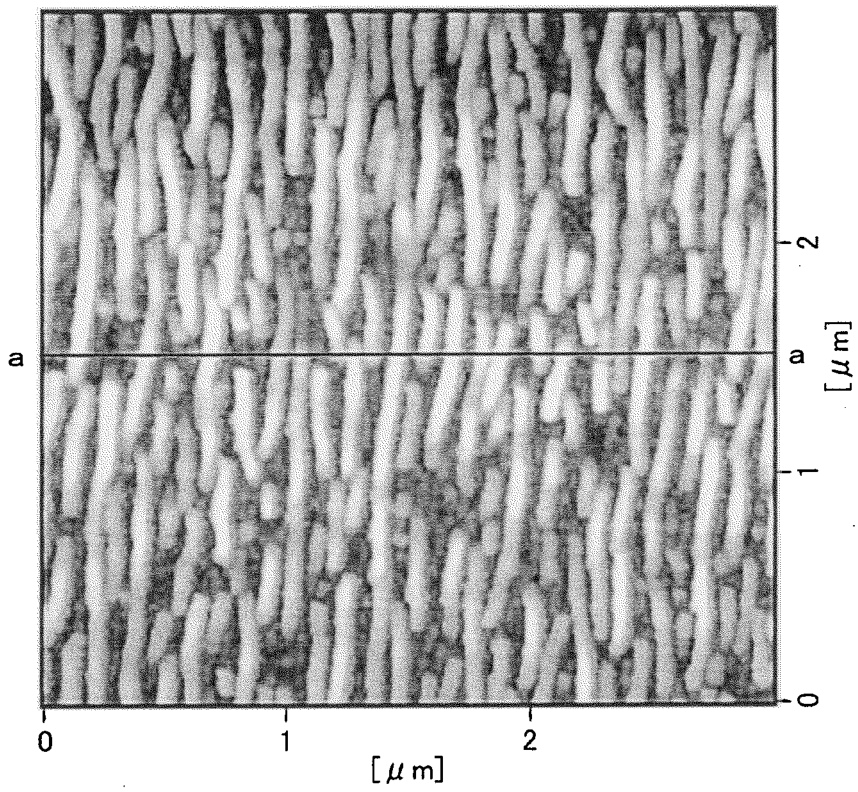


B

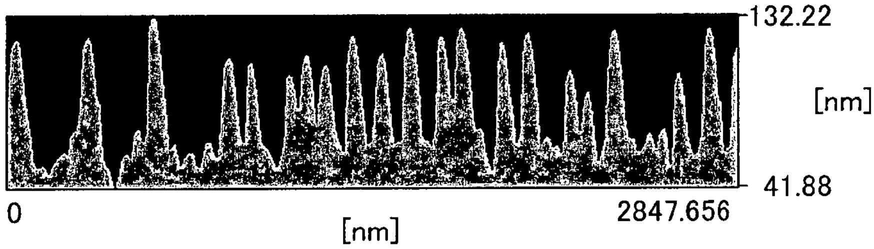

FIG. 22

A

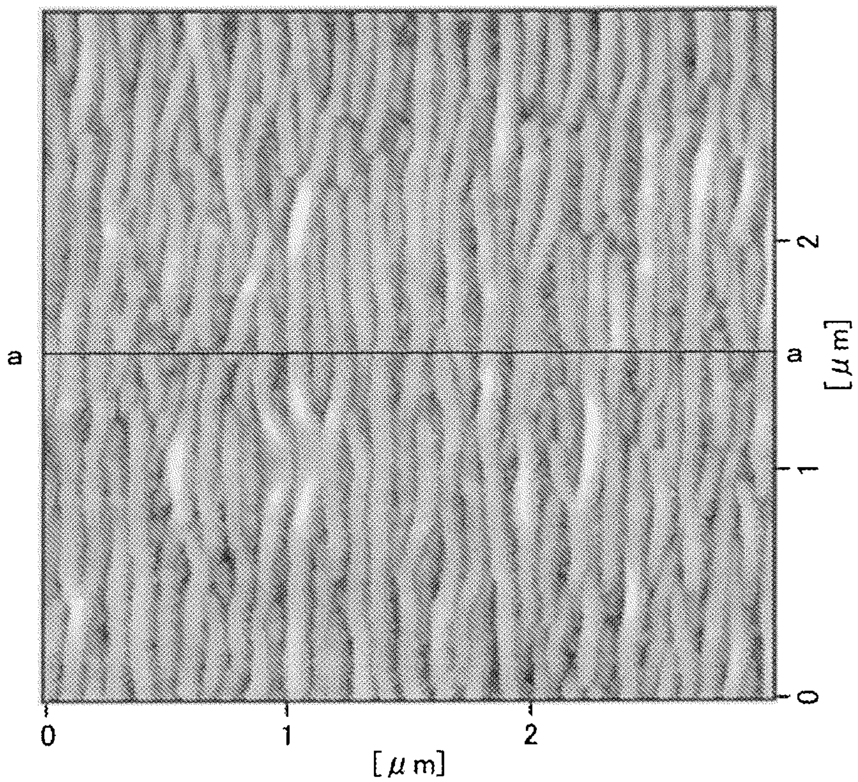


B

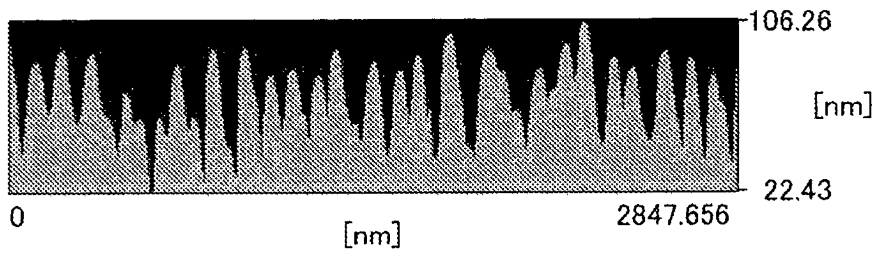

FIG. 23

A

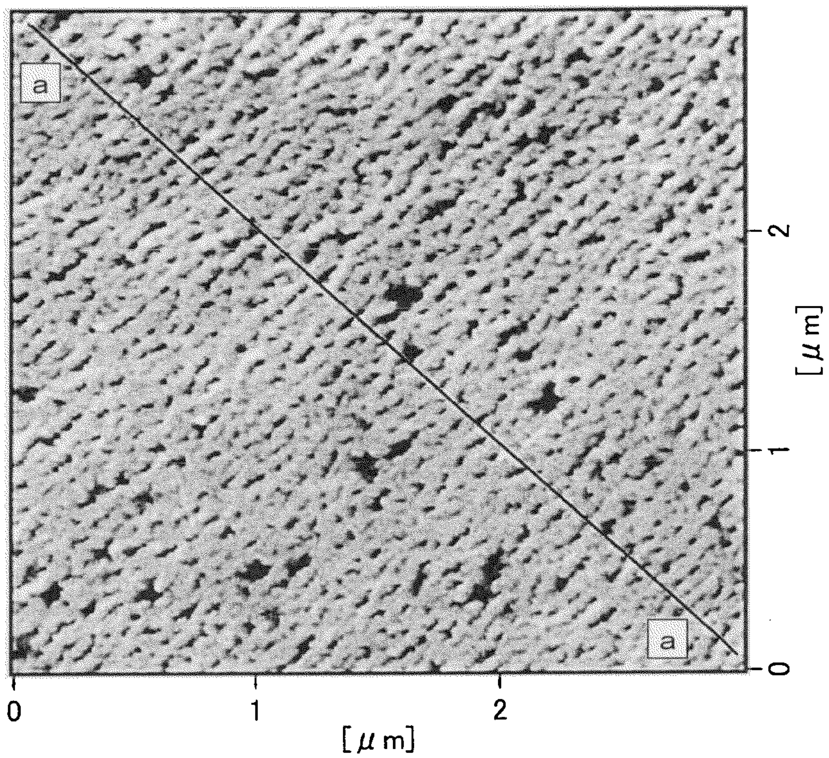


B

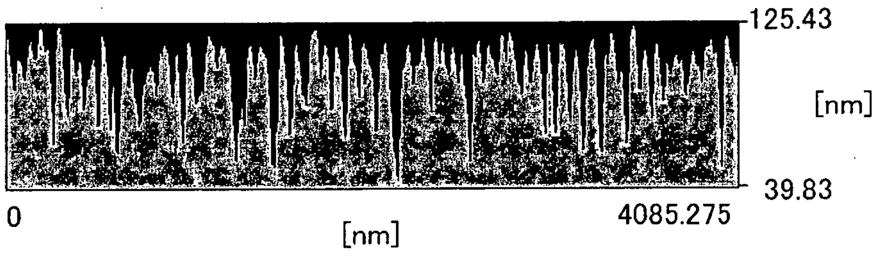

FIG. 24

A

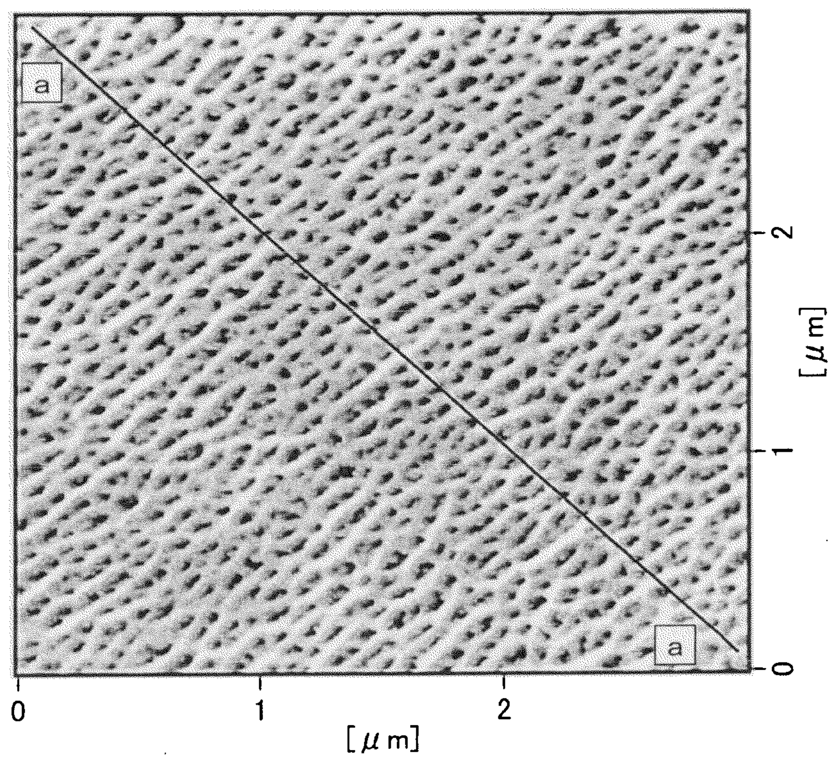


B

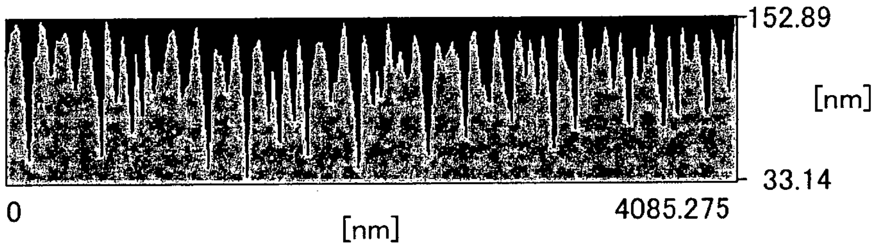

FIG. 25

A

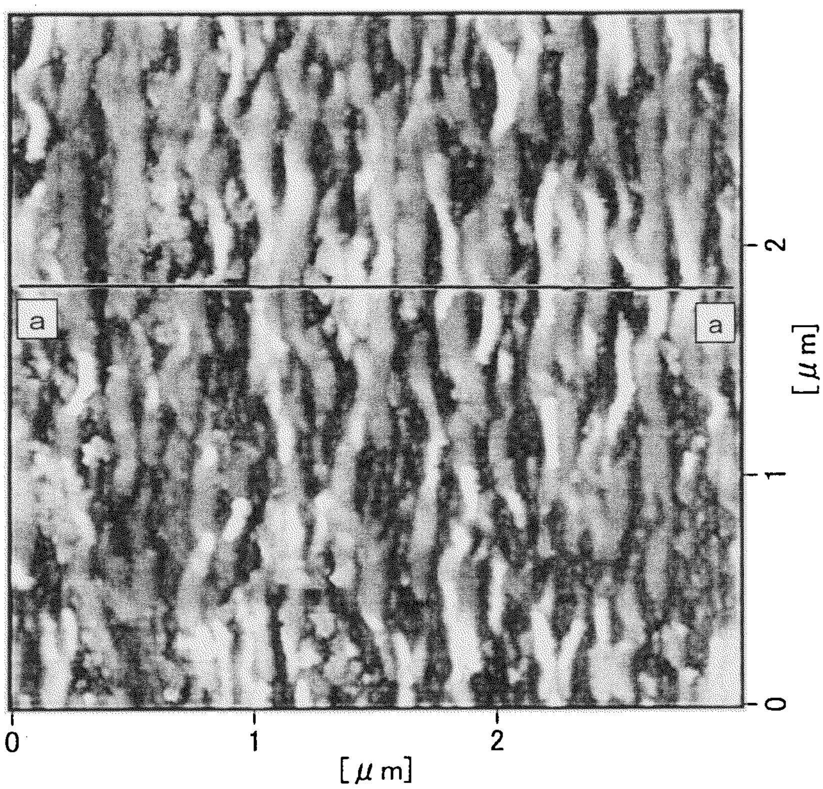


B

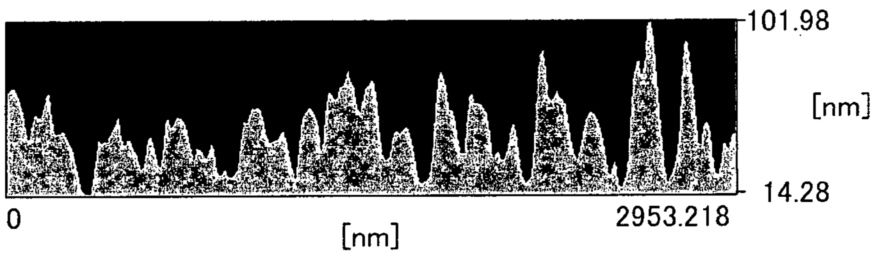

## INTERNATIONAL SEARCH REPORT

International application No.
PCT/JP2013/073890

A. CLASSIFICATION OF SUBJECT MATTER
*G02B1/10*(2006.01)i, *B32B3/30*(2006.01)i, *B32B27/18*(2006.01)i, *C09D5/16*(2006.01)i, *G06F3/041*(2006.01)i

According to International Patent Classification (IPC) or to both national classification and IPC

B. FIELDS SEARCHED

Minimum documentation searched (classification system followed by classification symbols)
G02B1/10, B32B3/30, B32B27/18, C09D5/16, G06F3/041

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2011-6667 A (Kawamura Institute of Chemical Research),<br>13 January 2011 (13.01.2011),<br>claims; paragraphs [0001] to [0002], [0020] to [0056], [0062] to [0106]; example 13<br>& US 2012/0121858 A1 & WO 2010/137542 A1<br>& DE 112010002076 T5 & CN 102448622 A<br>& KR 10-2012-0022816 A | 1-9,13,15, 18-21<br>10-12,14, 16-17 |
| X<br>A | JP 2007-137767 A (Matsushita Electric Industrial Co., Ltd.),<br>07 June 2007 (07.06.2007),<br>claims; paragraphs [0006], [0035] to [0060]; fig. 2<br>& US 5324566 A & EP 497189 A2<br>& DE 69218811 T2 & KR 10-1996-0008915 B1 | 1-4,6,10-12, 18-21<br>5,7-9,13-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
07 November, 2013 (07.11.13)

Date of mailing of the international search report
19 November, 2013 (19.11.13)

Name and mailing address of the ISA/
Japanese Patent Office

Facsimile No.

Authorized officer

Telephone No.

Form PCT/ISA/210 (second sheet) (July 2009)

INTERNATIONAL SEARCH REPORT

International application No.
PCT/JP2013/073890

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | WO 2012/105539 A1 (Mitsubishi Rayon Co., Ltd.), 09 August 2012 (09.08.2012), paragraphs [0043] to [0044], [0051] to [0075], [0106] to [0114], [0117], [0129] to [0136]; fig. 3<br>& JP 5128719 B1 & KR 10-2013-0069876 A<br>& CN 103261329 A & TW 201235178 A1 | 1-4,6-9, 13-14,17-21<br>15-16 |
| Y | JP 2002-194084 A (Mitsubishi Chemical Corp.), 10 July 2002 (10.07.2002), paragraphs [0015] to [0024]<br>(Family: none) | 15-16 |
| P,X | WO 2013/125081 A1 (Dexerials Corp.), 29 August 2013 (29.08.2013), entire text; all drawings<br>& JP 5045857 B1 | 1-21 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4666667 B
- JP 2010128363 A